# EUROPÄISCHE PATENTSCHRIFT

(11) **EP 4 332 519 B1**
(45) Veröffentlichungstag und Bekanntmachung des Hinweises auf die Patenterteilung: **04.06.2025**
(21) Anmeldenummer: 22192623.1
(22) Anmeldetag: 29.08.2022
(51) Int. Cl.: G01F 23/292, E04G 21/02, E04G 11/06

(54) **VERFAHREN ZUM ÜBERWACHEN EINER STEIGGESCHWINDIGKEIT EINES EINFÜLLMATERIALS, SENSOREINRICHTUNG ZUM ÜBERWACHEN DER STEIGGESCHWINDIGKEIT, COMPUTERPROGRAMMPRODUKT, COMPUTERLESBARES MEDIUM UND SENSORKONTROLLSYSTEM UMFASSEND EINE SENSOREINRICHTUNG**
METHOD FOR MONITORING A CLIMBING SPEED OF A FILLING MATERIAL, SENSOR DEVICE FOR MONITORING THE CLIMBING SPEED, COMPUTER PROGRAM PRODUCT, COMPUTER READABLE MEDIUM AND SENSOR CONTROL SYSTEM COMPRISING A SENSOR DEVICE
PROCÉDÉ DE SURVEILLANCE D'UNE VITESSE DE MONTÉE D'UNE MATIÈRE D'EMBALLAGE, DISPOSITIF CAPTEUR PERMETTANT DE SURVEILLER LA VITESSE DE MONTÉE, PRODUIT PROGRAMME INFORMATIQUE, SUPPORT LISIBLE PAR ORDINATEUR ET SYSTÈME DE COMMANDE DE CAPTEUR COMPRENANT UN DISPOSITIF CAPTEUR

(43) Veröffentlichungstag der Anmeldung: 06.03.2024
(73) Patentinhaber: Technische Universität Graz, 8010 Graz (AT)
(72) Erfinder: Hofstadler, Christian, 8232 Grafendorf (AT); Stöckl, Ralph, 8044 Graz (AT); Stöckl, Christoph, 8010 Graz (AT)
(74) Vertreter: IPrime Rentsch Kaelin AG

(56) Entgegenhaltungen:
- CN-A- 114 151 299
- CN-U- 207 675 267
- DE-A1- 102006 053 393
- DE-A1- 102019 108 781
- JP-A- 2000 257 263
- JP-A- 2009 083 353
- JP-A- H11 131 807

## Beschreibung

Die vorliegende Erfindung betrifft ein Verfahren zum Überwachen einer Steiggeschwindigkeit eines Einfüllmaterials gemäss dem Patentanspruch 1, eine Sensoreinrichtung gemäss dem Patentanspruch 9, ein Computerprogrammprodukt gemäss dem Patentanspruch 13, ein computerlesbares Medium gemäss dem Patentanspruch 14 und ein Sensorkontrollsystem umfassend die Sensoreinrichtung gemäss dem Patentanspruch 15.

### Technologischer Hintergrund

Die Bauindustrie steht unter enormen Zeitdruck für die Fertigstellung von Bauwerken und benötigt immer schnellere Herstellverfahren, mit denen ein Bauwerk herstellbar ist. Eine bewährte Methode ist es, eine Schalung aufzustellen und die Bausubstanz in die Schalung zu füllen. Dabei umfasst eine Schalung viele einzelne Bauteile, beispielsweise mehrere Schalungswände, welche nebeneinander und übereinander aneinander anliegend sowie gegenüber zueinander, montiert werden und im zusammengefügten Zustand typischerweise die Schalung bilden. Das Einfüllmaterial, auch als Bausubstanz bekannt, beispielsweise Frischbeton, wird anschliessend in die Schalungsöffnung eingefüllt. Typischerweise wird eine Schalung zu unterschiedlichen Zeitpunkten abschnittsweise mit dem Einfüllmaterial befüllt, sodass mehrere Einfüllmateriallagen übereinander in der Schalung angeordnet werden. Die Schalung muss nach einiger Zeit nur mehr abgebaut werden, sodass die fertigen Bauwerksbauteile bzw. Bauwerkswände und Bauwerksdecken überbleiben. Dabei werden immer höhere und massivere Schalungen eingesetzt. Je höher und aufwändiger die Schalungen sind, umso schwieriger ist es, eine vernünftige Qualität in den Bauwerksbauteile bereit zu stellen.

Aus dem Stand der Technik ist die DE 10 2019 108 781 A1 bekannt. Dort ist ein computergestütztes Verfahren und eine Einrichtung zur optimierten Steuerung der Förderleistung einer Betonpumpe zur Befüllung einer Schalungsanordnung mit einer pumpfähigen Füllmasse offenbart. Dabei wird eine zulässige Steiggeschwindigkeit für die Befüllung der Schalungsanordnung mit der Füllmasse anhand von Material- und Umgebungsparameter ermittelt, der statische Füllmassendruck gemessen und eine zulässigen Förderleistung der Betonpumpe in Abhängigkeit von der ermittelten zulässigen Steiggeschwindigkeit und des gemessenen statischen Füllmassendrucks an der Schalungsanordnung berechnet. Eine gattungsähnliche Vorrichtung ist in der FR 27 20 826 A1 offenbart.

Nachteilig an diesen bekannten Lösungen ist, dass die Drucksensoren zum Messen des statischen Füllmassendrucks nur an einzelnen Punkten der Schalungsanordnung angebracht sind, sodass die Druckmessung des statischen Füllmassendrucks sehr ungenau ist. Bei flächenmässig grossen Bauteilen in den Schalungsanordnungen sind darüber hinaus eine Vielzahl von Drucksensoren notwendig, sodass die Druckdatenerfassung aufwändig ist.

Aus dem Stand der Technik ist die JP 2013 019 202 A bekannt. Darin ist ein Verfahren zum Messen der Höhenverteilung beim Betonieren von Strassen offenbart. Dabei werden Laserabstandsmesseinrichtungen zum Messen der Betonhöhe der zu betonierenden Strasse verwendet und die gemessenen Daten werden an eine Anzeigeeinrichtung übermittelt. Im Verfahren wird eine bereits betonierte Betonhöhe mit einer aktuellen Betonhöhe verglichen und verschiedene Betonhöhen auf der Strasse in einer Anzeigeeinrichtung mit farbgebenden Animationen angezeigt.

Nachteilig an dieser bekannten Lösung ist, dass eine aufwendige dreidimensionale Parametrisierung des zu betonierenden Strassenvolumens notwendig ist, um Unebenheiten an der Strassenoberfläche zu vermeiden. Darüber hinaus sind mehrere Laserabstandsmesseinrichtungen notwendig, sodass das Messsystem sehr teuer ist.

Aus dem Stand der Technik ist die JP 2018 059 329 A bekannt. Darin ist ein Verfahren zur Bestimmung der Höhe beim Betongiessen über Referenzpunkte und einem Kommunikationsmittel offenbart, welches auf dem fliessbetonführenden Befüllwerkzeug angeordnet ist. Zusätzliche werden mittels einem GPS oder mit Laserabstandsmessungen Koordinaten bestimmt und mit den Referenzpunkten abgeglichen. Damit soll der Betongiessvorgang beschleunigt werden und Daten zum Betongiessen gesammelt werden. Ein gattungsähnliches Verfahren ist in der JP 2009 083353 A offenbart.

Nachteilig an diesen bekannten Lösungen ist, dass keine Information zur Betonqualität beim Betongiessen in den Befüllprozess einfliesst.

Aus dem Stand der Technik ist die CN 114 151 299 A bekannt. Dort ist ein Geschwindigkeitsregelsystem für eine Betonförderpumpe für Stahlschalen offenbart, das eine Betonförderpumpe, eine Förderpumpen-SPS-Einheit zum Steuern der Betonförderpumpe, einen Laser-Entfernungsmesser, ein PC-Steuerterminal, eine Kommunikationsinteraktionseinheit und eine SPS-Hauptsteuereinheit umfasst. Der Laser-Entfernungsmesser erkennt im Aufmerksamkeitsprozess den Höhenunterschied zwischen dem Betonflüssigkeitsstand und dem Laser-Entfernungsmesser und überträgt Informationen an die SPS-Hauptsteuereinheit, und die SPS-Hauptsteuereinheit steuert die Pumpgeschwindigkeit der Betonförderpumpe entsprechend dem Höhenunterschied. Durch die Zusammenarbeit der Betonförderpumpe, der zur Steuerung der Betonförderpumpe verwendeten Förderpumpen-SPS-Einheit, des Laser-Entfernungsmessers und der SPS-Hauptsteuereinheit können die Höheninformationen zum Betonflüssigkeitsstand über den Laser-Entfernungsmesser zurückgemeldet werden, die Pumpgeschwindigkeit kann entsprechend der Höheninformationen eingestellt werden, in unterschiedlichen Gießabschnitten können präzise Geschwindigkeitsänderungen vorgenommen werden, im gesamten Gießprozess wird eine präzise Geschwindigkeitskontrolle erreicht und die Gießgeschwindigkeit wird kontrolliert.

### Darstellung der Erfindung

Eine Aufgabe der Erfindung besteht darin mindestens einen der Nachteile des Standes der Technik zu vermeiden, und insbesondere ein verbessertes Verfahren zum Überwachen einer Steiggeschwindigkeit eines Einfüllmaterials in einer Schalung zu schaffen, sodass eine Identifikation von Qualitätsmängeln in der Bausubstanz bereits beim Einfüllen des Einfüllmaterials möglich ist. Des Weiteren sollen eine verbesserte Sensoreinrichtung zum Überwachen der Steiggeschwindigkeit, ein verbessertes Computerprogrammprodukt, ein computerlesbares Medium und ein verbessertes Sensorkontrollsystem geschaffen werden, mit denen eine Identifikation von Qualitätsmängel in der Bausubstanz bereits beim Einfüllen des Einfüllmaterials ermöglicht ist.

Diese Aufgabe wird durch die Merkmale der unabhängigen Patentansprüche gelöst. Vorteilhafte Weiterbildungen sind in den Figuren und in den abhängigen Patentansprüchen dargelegt.

Ein erfindungsgemässes Verfahren zum Überwachen einer Steiggeschwindigkeit eines Einfüllmaterials in einer vertikal befüllbaren Schalung mit zumindest einer optischen Sensoreinrichtung und zumindest einer Recheneinrichtung umfasst zumindest die folgenden Schritte:
a) Bereitstellen zumindest eines Grenzwertes für die Steiggeschwindigkeit des Einfüllmaterials in der zumindest einen Recheneinrichtung, , wobei der zumindest eine Grenzwert zumindest auf einem Parameter der Umgebungsbedingungen, insbesondere der Lufttemperatur, einer Referenztemperatur und/oder einer Einbautemperatur, basiert;
b) Bereitstellen zumindest eines Messintervalls für eine optische Messung mit der optischen Sensoreinrichtung in der zumindest einen Recheneinrichtung, wobei insbesondere das zumindest eine Messintervall von einer Konsistenzinformation des Einfüllmaterials abhängig ist;
c) Befüllen der Schalung mit dem Einfüllmaterial;
d) Durchführen von optischen Messungen mit der zumindest einen optischen Sensoreinrichtung zu zumindest einer aktuellen Schüttlagenhöhe des Einfüllmaterials in der Schalung während der Befüllung der Schalung mit dem Einfüllmaterial;
e) Berechnen der aktuellen Steiggeschwindigkeit des Einfüllmaterials bei der Befüllung der Schalung mit dem Einfüllmaterial zumindest mithilfe der Messwerte der optischen Messungen der zumindest einen aktuellen Schüttlagenhöhe, dem zumindest einen Parameter der Umgebungsbedingungen, sowie zumindest einer Zeitmessung im zumindest einen Messintervall in der zumindest einen Recheneinrichtung, wobei dafür ein Zeitstempel in der zumindest einen Recheneinrichtung gesetzt wird oder eine Zeitmessvorrichtung zum Ermitteln der Zeitmessung verwendet wird;;
f) Ausgabe zumindest eines Warnsignals, wenn die zumindest eine aktuelle Steiggeschwindigkeit des Einfüllmaterials den zumindest einen bereitgestellten Grenzwert der Steiggeschwindigkeit des Einfüllmaterials erreicht.

Ein Überschreiten des Grenzwerts der Steiggeschwindigkeit bzw. ein zu schnelles Einfüllen des Einfüllmaterials in der Schalung führt dazu, dass sich die Schalung übermäßig verformt und die vorgegebene Ebenheit der Schalung nicht mehr eingehalten ist. Ist der Grenzwert der Steiggeschwindigkeit überschritten, so ist mit Mängeln in der Bausubstanz des fertiggestellte Bauwerks zu rechnen. Zumindest sind nun der Ort und der Zeitpunkt des möglichen Mangels in einer Schüttlagenhöhe identifizierbar, sodass ein späteres Prüfen der Bausubstanz einfacher erfolgen kann. Wenn die aktuelle Steiggeschwindigkeit unter dem Grenzwert ist, wird verhindert, dass sich Arbeits- und Elementfugen zwischen den Bauteilen der Schalung öffnen und somit die Schalung versagt. Ein Versagen der Bauteile würde die Sicherheit der Arbeitskräfte auf der Baustelle gefährden. Durch die Ausgabe des zumindest einen Warnsignals werden die Arbeitskräfte auf der Baustelle in Echtzeit frühzeitig gewarnt, sodass ein Überschreiten des Grenzwerts der aktuellen Steiggeschwindigkeit ein rasches Agieren und Handeln der Arbeitskräfte direkt auf der Baustelle ermöglicht, bevor die Schalung in Mitleidenschaft gezogen wird. Das Einfüllmaterial kann einerseits von oben in eine Schalungsöffnung in die Schalung eingefüllt werden, oder andererseits mittels einer Öffnung in einem Bauteil der Schalung in die Schalung eingepresst werden. Dabei ist es wesentlich, die Konsistenzinformation, wie beispielsweise die Konsistenzklasse, des Einfüllmaterials zu kennen und im Befüllvorgang direkt zu berücksichtigen. Dadurch steigt die Qualität der Oberfläche der Bausubstanz unmittelbar nach der Fertigstellung des Bauwerks und die Arbeitssicherheit ist wesentlich verbessert. Auf ein Nachbearbeiten der Oberflächen der Bauwerkswand kann verzichtet werden, da eine verbesserte Qualität der Farbgleichheit, Ebenheit und Gleichmässigkeit der Bauwerkswand garantiert ist. Die Arbeitskräfte können sich auf das zumindest eine Warnsignal verlassen, sodass eine Stressreduktion der Arbeitskräfte auf der Baustelle erkennbar ist. Um die geschilderten Fehler inklusive aller nachteiligen Konsequenzen vorzubeugen, überwacht das hier vorliegende Verfahren die Einhaltung der aktuellen Steiggeschwindigkeit während des Befüllvorgangs und erhöht somit die Arbeitssicherheit sowie die Qualität der Oberflächen der Bauteile der Bauwerke bzw. der Bauwerkswände und Bauwerksdecken. Das vorliegende Verfahren ermöglicht eine Genauigkeit der Befüllung der Schalung mit dem Einfüllmaterial im Millimeterbereich. Darüber hinaus werden die Folgekosten durch die Vermeidung teurer Verbesserungsmassnahmen am Bauwerk minimiert.

Insbesondere ist das Einfüllmaterial Frischbeton. Die Konsistenz des Frischbetons ist ein Mass für die Steifigkeit des Frischbetons und definiert seine Verarbeitbarkeit. Die Konsistenz wird in Ausbreitmassklassen und Verdichtungsmassklassen eingeteilt, die durch den Ausbreitversuch und den Verdichtungsversuch bei steiferen Konsistenzen nach Walz gemessen werden. Der Ausbreitversuch kann gemäss der *DIN 12350-5 Prüfung von Frischbeton* definiert sein und der Verdichtungsversuch kann gemäss der *DIN EN 12350-4 Prüfung von Frischbeton* definiert sein. Die Einteilung der Konsistenzklassen reicht von steifer über plastischer, weicher, sehr weicher, fliessfähiger bis sehr fliessfähiger Konsistenzklasse für Frischbeton. Besonders beim Herstellungsprozess von Sichtbetonbauteilen vermindern zu schnelles Betonieren und ungleichmäßige Schüttlagenhöhen bzw. Frischbetonlagenhöhen die Qualität der Sichtbetonoberfläche. Die daraus resultierenden Mängel, beispielsweise in Bezug auf die Farbgleichheit oder Oberflächenbeschaffenheit der Sichtbetonlagen erfordern anschließend eine kostenintensive Sanierung. Das zuvor beschriebene Verfahren identifiziert die Mängel und verhindert eine nachfolgende Sanierung der Oberflächen. Alternative Einfüllmaterialien sind Mörtel, Estrich oder Asphalt, wobei deren Konsistenzinformation unterschiedlich zu denen von Frischbeton sein können. Die Konsistenz dieser Einfüllmaterialien sind ebenfalls ein Mass für die Steifigkeit des Einfüllmaterials und definiert deren Verarbeitbarkeit.

Beim Einfüllen kann die Art der Schalung wesentlich sein, wobei eine vertikal befüllbare Schalung auch geneigte und/oder gekrümmte Bauteile umfassen kann, sodass sich die Oberflächen der Bauteile des Bauwerks bzw. der Bauwerkswände bereits beim Herstellen vordefiniert formen lassen. Dabei kann je nach Bauteil für die Schalung auf einen zulässigen Schalungsdruck, beispielsweise aus der Literatur, zurückgegriffen werden.

Mit den optischen Messungen der zumindest einen optischen Sensoreinrichtung zu der aktuellen Schüttlagenhöhe kann entweder direkt oder indirekt gleichzeitig eine Zeitmessung der Veränderung der aktuellen Schüttlagenhöhe ermittelt werden, um das bereitgestellte Messintervall zu überwachen. Somit wird ein Zeitstempel in der zumindest einen Recheneinrichtung gesetzt, um die aktuelle Steiggeschwindigkeit hochpräzise und in Echtzeit zu bestimmen. Alternativ oder ergänzend kann eine Zeitmessvorrichtung zum Ermitteln der Zeitmessung verwendet werden, sodass eine redundante Messeinrichtung vorhanden ist, um die Zeitmessung weiter zu verbessern und somit die Genauigkeit in der Berechnung der aktuellen Steiggeschwindigkeit zu verbessern.

Vorteilhaft wird die Berechnung der aktuellen Steiggeschwindigkeit mit den Messwerten der optischen Messungen durchgeführt, wobei der Mittelwert oder der Median der letzten 5 bis 20 Messwerte verwendet werden. Damit ist eine zuverlässige Berechnung der aktuellen Steiggeschwindigkeit möglich, sodass das Vergleichen mit dem bereitgestellten Grenzwert verbessert ist. Die Messwerte zumindest der optischen Messung können einem spezifischen Bauteil zugeordnet werden, sodass sich das Bauteil der Schalung einfach parametrisieren lässt. Alternativ dazu wird für die Berechnung der aktuellen Steiggeschwindigkeit ein mathematischer Filter, wie beispielsweise ein Kalman-Filter, verwendet, welcher zur Schätzung der Messwerte der optischen Messung eingesetzt wird. Damit können nicht direkt gemessene oder messbare Systemgrößen abgeschätzt werden, während die Fehler der optischen Messungen optimal reduziert werden.

Insbesondere werden in der Berechnung der aktuellen Steiggeschwindigkeit verschiedene vorab definierte Bandbreiten zur Elimination von Ausreissern der Messwerte verwendet. Damit ist die Berechnung wesentlich verbessert, sodass unnötige Warnungen mit dem zumindest einen Warnsignal verhindert sind.

Der bereitgestellte Grenzwert der Steiggeschwindigkeit kann entweder manuell in die zumindest eine Recheneinrichtung eingegeben oder anhand individueller Parameter ermittelt werden. Zu diesen Parametern zählen nicht abschliessend aufgezählt eine Rohdichte des Einfüllmaterials, eine Konsistenzklasse des Einfüllmaterials, eine Einfüllmaterialtemperatur (bspw. Frischbetontemperatur), eine Lufttemperatur, eine Erstarrungszeit, eine Art des Verdichtens des Einfüllmaterials, eine Referenztemperatur, ein Erstarrungsende bei der Referenztemperatur, eine Einbautemperatur, eine Art der Schalung, eine Oberflächenbeschaffenheit der Schalungshaut, mögliche Sichtbetonanforderungen, wie beispielsweise eine Farbgebung, eine Höhe des Bauteils in der Schalung, und eine Zusammensetzung des Einfüllmaterials. Sollten diese Parameter nicht vorliegen, wird in der zumindest einen Recheneinrichtung auf einen fix definierten Grenzwert zurückgegriffen. Dieser kann je nach Bauteil der Schalung bzw. Schüttlagenhöhe in einer Tabelle in der zumindest einen Recheneinrichtung hinterlegt sein und steht somit unmittelbar zur Verfügung.

Das zumindest eine Messintervall kann manuell in die zumindest eine Recheneinrichtung eingegeben oder anhand der Konsistenzklasse des Einfüllmaterials bestimmt werden. Alternativ oder ergänzend wird das zumindest eine Messintervall anhand einer Anzahl der optischen Sensoreinrichtungen bei dem zu befüllenden Bauteil bestimmt. Beim Fehlen des zumindest einen Messintervalls, kann die zumindest eine Recheneinrichtungen einen vorgegebenen Wert für das zumindest eine Messintervall festsetzen. Das zumindest eine Messintervall liegt insbesondere zwischen 0 und 50 Sekunden. Damit ist eine bewährte Einfüllmenge in die Schalung bereitgestellt, sodass eine ausreichende Schüttlagenendhöhe erreicht ist.

Insbesondere werden mehrere Messintervalle bereitgestellt, welche in Abhängigkeit der Konsistenzinformation des Einfüllmaterials gesteuert werden. Darüber hinaus können die mehreren Messintervalle dynamisch gehalten werden, und in der zumindest einen Recheneinrichtung hinterlegt werden, wobei die mehreren Messintervalle je nach Eigenschaft des Einfüllmaterials verlängert oder verkürzt werden. Damit sind dynamische Abläufe im Befüllvorgang berücksichtigt. Das kann bedeuten, dass sich die Dauer des zumindest einen Messintervalls oder der mehreren Messintervalle erhöht, wenn kein Einfüllmaterial in die Schalung eingefüllt wird.

Vorzugsweise umfassen die optischen Messungen eine aktuelle Distanz von der zumindest einen aktuellen Schüttlagenhöhe des Einfüllmaterials in der Schalung, zu der zumindest einen optischen Sensoreinrichtung während der Befüllung des Einfüllmaterials. Damit ist die aktuelle Steiggeschwindigkeit einfach bestimmbar. Weiters kann berücksichtigt werden, dass bei einer Fehlermeldung der optischen Sensoreinrichtung sofort eine weitere optische Messung der aktuellen Distanz, von der zumindest einen aktuellen Schüttlagenhöhe des Einfüllmaterials in der Schalung, zu der zumindest einen optischen Sensoreinrichtung während der Befüllung des Einfüllmaterials durchgeführt wird, sodass eine Fehlerabhängigkeit im hier beschriebenen Verfahren minimiert ist.

Insbesondere wird ein sprunghafter Anstieg der aktuellen Steiggeschwindigkeit in der zumindest einen Recheneinrichtung rechnerisch ausgeglichen, welcher beispielsweise durch Fehlmessungen mit der zumindest einen optischen Sensoreinrichtung erzeugt wird. Damit wird beispielsweise ein Einfüllmaterialwulst erkannt, wenn dieser beim Befüllen der Schalung mit dem Einfüllmaterial entsteht. Ein unnötiges Ausgeben des zumindest einen Warnsignals wird somit verhindert.

Darüber hinaus werden insbesondere, je nach Art der Schalung bzw. der Bauteile der Schalung, in zumindest einem Bauteil individuell vordefinierte Schüttlagengrenzhöhen festgesetzt und in der zumindest einen Recheneinrichtung für das zumindest eine Bauteil bereitgestellt. Damit lässt sich das zumindest eine Bauteil parametrisieren und das Einfüllen mit dem Einfüllmaterial verbessert steuern. Insbesondere weist das zumindest eine Bauteil der Schalung mehrere vordefinierte Schüttlagengrenzhöhen auf. Damit kann das zumindest eine Bauteil auf das Einfüllmaterial beim Befüllen abgestimmt werden und eine zum Einfüllmaterial passende Schüttlagengrenzhöhe vordefiniert werden. Eine Schüttlagengrenzhöhe kann von der Konsistenzinformation des Einfüllmaterials abhängen, sodass im Bauteil je nach verwendetem Einfüllmaterial unterschiedliche Schüttlagengrenzhöhen vorliegen. Beim Einfüllen können dem zumindest einen Bauteil mehrere Schüttlagengrenzhöhen zugeordnet sein, wobei eine unterschiedliche aktuelle Steiggeschwindigkeit je nach Schüttlagengrenzhöhe erlaubt ist. Demzufolge kann jeder Schüttlagengrenzhöhe in dem zumindest einen Bauteil ein eigener vordefinierter Grenzwert der Steiggeschwindigkeit vorliegen. Die vordefinierten Schüttlagengrenzhöhen können beispielsweise in einer Tabelle in einer Speichereinrichtung hinterlegt sein.

Insbesondere korreliert das zumindest eine Messintervall mit zumindest einer vordefinierten Schüttlagengrenzhöhe in dem zumindest einen Bauteil. Damit wird das gesamte Verfahren sehr dynamisch und eignet sich besonders für eine hocheffiziente Befüllung der Schalung, wobei eine erhöhte Arbeitssicherheit gegeben ist und die Qualität der Bausubstanz wesentlich verbessert ist.

Bevorzugt wird die aktuelle Steiggeschwindigkeit intervallbezogen berechnet. Dabei berechnet die zumindest eine Recheneinrichtung die aktuelle Steiggeschwindigkeit für das zumindest eine Messintervall, sodass bei mehreren übereinander angeordneten Messintervallen, jedes Messintervall individuell überwachbar ist und ein individuelles Warnsignal ausgegeben werden kann.

Alternativ oder ergänzend wird die aktuelle Steiggeschwindigkeit durchschnittlich berechnet. Dabei berechnet die zumindest eine Recheneinrichtung die aktuelle Steiggeschwindigkeit im Durchschnitt über mehrere Messintervalle, sodass die Gesamtbelastung, beispielsweise Gesamtdruckbelastung, an der Schalung erkennbar ist.

Bevorzugterweise wird vor dem Schritt a) zumindest ein erster Parameter der Schalung bereitgestellt, welcher in der Berechnung der aktuellen Steiggeschwindigkeit berücksichtigbar ist. Damit ist die Berechnung der aktuellen Steiggeschwindigkeit in der bereitgestellten Schalung verbessert möglich.

Insbesondere wird zumindest eine Höhe der Schalung bereitgestellt. Die Höhe der Schalung bzw. die Höhe eines Bauteils der Schalung kann ein wesentlicher Parameter für die Berechnung der Steiggeschwindigkeit sein, da höhere Bauteile unterschiedliche vordefinierte Grenzwerte aufweisen als niedere Bauteile.

Alternativ oder ergänzend wird zumindest ein Materialparameter des Einfüllmaterials bereitgestellt. Zum zumindest einen ersten Parameter können, nicht abschliessend aufgezählt, zumindest ein Parameter aus der Rohdichte des Einfüllmaterials, eine Konsistenzklasse, eine Einfüllmaterialtemperatur (bspw. Frischbetontemperatur) eine Erstarrungszeit, eine Art des Verdichtens des Einfüllmaterials, ein Erstarrungsende bei einer Referenztemperatur, mögliche Sichtbetonanforderungen, oder eine Zusammensetzung des Einfüllmaterials (beispielsweise Betonzusammensetzung) zählen.

Alternativ oder ergänzend kann zumindest ein weiterer Parameter bereitgestellt werden, welcher in der Berechnung einer maximalen erlaubten Steiggeschwindigkeit berücksichtigbar ist. Zum zumindest einen weiteren Parameter können, nicht abschliessend aufgezählt, zumindest ein Parameter aus einer Lufttemperatur, einer Referenztemperatur, einer Einbautemperatur, eine Art der Schalung oder eine Oberflächenbeschaffenheit der Schalungshaut zählen. Damit können auch die Umgebungsbedingungen zur Berechnung der maximalen Steiggeschwindigkeit des Einfüllmaterials beitragen. Insbesondere basiert der zumindest eine bereitgestellte Grenzwert auf zumindest einem weiteren Parameter. Die maximale erlaubte Steiggeschwindigkeit ist von den Einfüllrandbedingungen im Befüllvorgang abhängig. Der Wert der aktuellen Steiggeschwindigkeit kann von der Form der Schalung und von der Einfüllmenge des Einfüllmaterials abhängen. Die aktuelle Steiggeschwindigkeit soll dabei die maximale Steiggeschwindigkeit nicht erreichen, wobei der bereitgestellte Grenzwert derart definiert ist, dass der Wert der aktuellen Steiggeschwindigkeit stets unterhalb des Wertes der maximalen Steiggeschwindigkeit liegt. Darüber hinaus kann der bereitgestellte Grenzwert genügend weit vom Wert der maximalen Steiggeschwindigkeit beabstandet sein, sodass die aktuelle Steiggeschwindigkeit keinesfalls den Wert der maximalen Steiggeschwindigkeit erreicht.

Vorzugsweise wird eine Schüttlagenhöhenentwicklung berechnet. Die Schüttlagenhöhenentwicklung umfasst den zeitlichen Verlauf der aktuellen Schüttlagenhöhe in der Schalung, wobei insbesondere die mehreren Messintervalle in die Berechnung einfliessen. Damit ist die Gesamtbelastung in der Schalung verbessert überwachbar, sodass eine Prognose des Befüllvorgangs erstellbar ist und eine erhöhte Arbeitssicherheit gegeben ist.

Insbesondere wird die Schüttlagenhöhenentwicklung zumindest einem Bauteil des Bauwerks zugeordnet. Damit kann ein historischer Ablaufplan für die Herstellung der Bauwerksbauteile erstellt werden, sodass eine ausreichend detaillierte Dokumentation erstellt ist. Die Anzahl der einzelnen Ablaufpläne für jedes Bauteil des Bauwerks ergibt eine vollumfängliche Dokumentation zu der Herstellung des Bauwerks. Damit kann nach der Fertigstellung des Bauwerks für jedes Bauwerksbauteil und für jede Schüttlage im Bauteil die zur Herstellung verwendete Steiggeschwindigkeit nachgewiesen werden. Die einzelnen Ablaufpläne können in einem Speichermedium bzw. einer Speichereinrichtung hinterlegt werden, sodass diese wiederverwendbar sind.

Insbesondere wird die Schüttlagenhöhenentwicklung zumindest einem Bauteil der Schalung zugeordnet. Damit kann ein historischer Ablaufplan für die Befüllung der Schalung mit dem Einfüllmaterial erstellt werden, sodass eine ausreichend detaillierte Dokumentation erstellt ist. Die Anzahl der einzelnen Ablaufpläne für jede Schalung ergibt eine vollumfängliche Dokumentation der Befüllung aller Schalungen im Bauwerk. Die einzelnen Ablaufpläne können in einem Speichermedium bzw. einer Speichereinrichtung hinterlegt werden, sodass diese wiederverwendbar sind.

Bevorzugterweise wird die Verdichtungsphase des Einfüllmaterials bestimmt. Eine Verdichtungsphase im Befüllvorgang kann notwendig sein, um eine genügend hohe Verdichtung im Einfüllmaterial zu gewährleisten. Dabei wird in der Regel eine Vibrationseinrichtung in das Einfüllmaterial eingeführt, um mittel Vibrationen ein Verdichten des Einfüllmaterials zu ermöglichen. Während der Verdichtungsphase kann es ratsam sein, kein neues Einfüllmaterial in die Schalung einzufüllen. Das Erkennen der Verdichtungsphase verbessert die Qualität des Bauwerks, da ansonsten Mängel in der Bausubstanz aufgrund Lufteinschlüsse in der Bausubstanz auftreten können.

Alternativ oder ergänzend wird der Verdichtungsgrad des Einfüllmaterials bestimmt. Beim Verdichten werden beispielsweise Luftblasen im Einfüllmaterial freigesetzt, sodass das Einfüllmaterial dichter aneinander anliegt. Das Bestimmen des Verdichtungsgrads in einer Schüttlage erlaubt das Optimieren der Befüllzeit der Schalung mit dem Einfüllmaterial, sodass die Verdichtungsphasen reduziert werden und das Befüllen schnell abgeschlossen wird, ohne dass Qualitätsmängel an der Bausubstanz entstehen.

Vorzugsweise wird zumindest eine Temperatur an der Schalung gemessen. Die Temperatur an der Schalung kann die maximale Steiggeschwindigkeit des Einfüllmaterials beeinträchtigen, sodass das Messen und danach das Einbeziehen der Temperaturmessung in die Berechnung, die Genauigkeit der Berechnung der maximalen Steiggeschwindigkeit verbessert. Dabei kann die Oberflächentemperatur des Einfüllmaterials, die Oberflächentemperatur der Innenseite der Schalung, also der Schalungshaut, oder die Oberflächentemperatur an der Aussenseite der Schalung einzeln oder in Kombination aus mehreren Messungen verwendet werden. Je mehr Temperaturparameter gemessen werden und in die Berechnung einbezogen werden, umso genauer kann die maximale Steiggeschwindigkeit des Einfüllmaterials berechnet werden, sodass die Arbeitskräfte auf der Baustelle, wenn nötig in Echtzeit, mithilfe des zumindest einen Warnsignals gewarnt sind.

Alternativ oder ergänzend wird zumindest die Umgebungsluftfeuchte gemessen. Die Umgebungsluftfeuchte kann die maximale Steiggeschwindigkeit des Einfüllmaterials beeinträchtigen, sodass das Messen und danach das Einbeziehen der Feuchtemessung in die Berechnung die Genauigkeit der berechneten aktuellen Steiggeschwindigkeit verbessert.

Alternativ oder ergänzend wird die Umgebungstemperatur gemessen. Die Umgebungstemperatur kann die maximale Steiggeschwindigkeit des Einfüllmaterials beeinträchtigen, sodass das Messen und danach das Einbeziehen der Temperaturmessung in die Berechnung die Genauigkeit der berechneten aktuellen Steiggeschwindigkeit weiter verbessert.

Bevorzugterweise wird eine Unterbrechung der Befüllung mithilfe zumindest einiger Messwerte der optischen Messungen identifiziert. Die Messwerte der optischen Messungen lassen eine unveränderte aktuelle Schüttlagenhöhe über mehrere Messpunkte erkennen, sodass auf eine Unterbrechung der Befüllung geschlossen wird. Die Unterbrechung der Befüllung kann beispielsweise durch einen Ausfall der Fördermittel zum Fördern des Einfüllmaterials oder einen Mangel an der Einfüllmenge des Einfüllmaterials für das Fördermittel ausgelöst werden. Diese Messwerte können in der zumindest einen Recheneinrichtung verarbeitet werden und als weiteres Warnsignal ausgegeben werden.

Vorzugsweise werden zumindest Messwerte aus den optischen Messungen an ein elektronisches Endgerät übermittelt. Das elektronische Endgerät kann die zumindest eine Recheneinrichtung umfassen, um die Messwerte zu verarbeiten und zumindest das Berechnen der aktuellen Steiggeschwindigkeit vorzunehmen. Darüber hinaus sind Fehlermeldungen in Bezug auf die optische Sensoreinrichtung oder auch Fehlmessungen aus den optischen Messungen in der zumindest einen Recheneinrichtung verarbeitbar und am elektronischen Endgerät anzeigbar.

Insbesondere werden zumindest Messwerte aus der optischen Messung an eine Ausgabeeinrichtung am elektronischen Endgerät ausgegeben. Damit hat das elektronische Endgerät direkt Zugriff auf die Messwerte und kann diese in Echtzeit verarbeiten oder speichern und die Messwerte beispielweise eine Arbeitskraft übermitteln.

Das elektronische Endgerät umfasst vorteilhaft die zumindest eine Recheneinrichtung und eine Speichereinrichtung, um die aktuelle Steiggeschwindigkeit des Einfüllmaterials zu berechnen. Damit können die Berechnungen beabstandet von der zumindest einen Sensoreinrichtung durchgeführt werden. Weiter vorteilhaft ist das elektronische Endgerät ein tragbares Endgerät, wie beispielsweise ein Laptop oder ein Tablet, sodass es vom Benutzer auf der Baustelle einfach bewegbar ist. Die zumindest eine Recheneinrichtung kann eine Software-Applikation (App) aufweisen, welche das Steuern der Sensoreinrichtung ausführt, sodass eine kompakte und einfache Lösungsmöglichkeit bereitgestellt ist, welche auf der Baustelle ohne Probleme implementierbar ist. Vorteilhaft weist das elektronische Endgerät eine Ausgabeeinrichtung auf, mit der das zumindest eine Warnsignal ausgegeben wird. Durch das zumindest eine Warnsignal ist ein rasches Agieren möglich, wodurch einerseits eine erhöhte Arbeitssicherheit gegeben ist und auch die Qualität der Betonoberflächen steigt.

Insbesondere ist das elektronische Endgerät als ein Mobiltelefon, wie beispielsweise ein Smartphone, ausgebildet. Typische Mobilgeräte weisen einen App-Store auf, sodass die App vom App-Store einfach herunterladbar ist und am Mobiltelefon einfach installierbar ist und somit dem Benutzer auf der Baustelle einfach zur Verfügung gestellt wird. Das Mobiltelefon weist dann die Software-Applikation (App) auf. Vorteilhaft ist die zumindest eine optische Sensoreinrichtung mit einer Steuereinrichtung verbunden. Das Mobiltelefon ist mit der Steuereinrichtung zum Austausch von Daten verbunden, wobei die App die zumindest eine optische Sensoreinrichtung mithilfe der Steuereinrichtung steuert. Die Steuerung der Sensoreinrichtung via App auf einem Mobiltelefon stellt ein höchst praktikables Element des beschriebenen Systems dar. Die App kann beispielsweise zunächst die Höhe der Schalung und die Konsistenzinformation des Einfüllmaterials abfragen, steuert anschliessend automatisch die Sensoreinrichtung zum Ermitteln der Schüttlagenhöhe an der Schalung an, und sendet den Befehl zur kontinuierlichen Messung der Distanz von der zumindest einen aktuellen Schüttlagenhöhe des Einfüllmaterials, oder dem Boden in der Schalung, zu der zumindest einen optischen Sensoreinrichtung. Das mithilfe der App vorgegebene zumindest eine Messintervall orientiert sich an der Konsistenzinformation. Hinzu kommt, dass die App die Messwerte über ein Mobilfunknetz an eine Dokumentationsplattform übermitteln kann und diese dort hinsichtlich Dokumentationsanforderungen entsprechend aufbereitbar sind. Das Mobiltelefon stellt somit ein kompaktes Bindeglied mit gleichzeitiger Datenaufbereitung zwischen der optischen Sensoreinrichtung und einer Dokumentationsplattform dar.

Insbesondere kann der Grenzwert der Steiggeschwindigkeit entweder manuell in der App bereitgestellt werden oder anhand der zuvor beschriebenen ersten Parameter oder weiteren Parameter, welche beim Erstellen eines neuen virtuellen Bauteils in der App abgefragt werden, festgelegt werden. Das virtuelle Bauteil in der App entspricht dann dem realen Bauteil in der Schalung. Ein neues Bauteil ist nach dem Implementieren in der App einfach in der App auswählbar, sodass einzelne Parameter für das neue Bauteil dem Benutzer bereits zur Verfügung stehen.

Insbesondere werden die mehreren Messintervalle in Abhängigkeit der Konsistenzinformation des Einfüllmaterials in der App verändert. Dabei kann die aktuelle Steiggeschwindigkeit berücksichtigt werden, sodass eine dynamischer Befüllvorgang möglich ist.

Alternativ oder ergänzend werden zumindest die Messwerte aus den optischen Messungen sowie das zumindest eine Messintervall an eine Speichereinrichtung übermittelt. Damit ist das Befüllen der Schalung mit dem Einfüllmaterial dokumentierbar und kann im Nachhinein nachvollzogen werden.

Insbesondere werden zumindest die Messwerte aus den optischen Messungen an eine Cloud übermittelt. Somit sind zumindest die Messwerte für mehrere Personen zugängig und sicher gespeichert. Insbesondere werden zumindest die Messwerte mithilfe einer Prüfsumme oder einer Blockchain Technologie gespeichert, sodass zumindest die Messwerte dezentral und fälschungssicher gespeichert sind.

Insbesondere werden zumindest die Messwerte aus den optischen Messungen an einen Server übermittelt, sodass zumindest die Messwerte zentral und sicher gespeichert sind.

Bevorzugterweise wird ein Befüllungssystem zum Befüllen der Schalung mit dem Einfüllmaterial gesteuert, wenn die zumindest eine aktuelle Steiggeschwindigkeit des Einfüllmaterials den zumindest einen bereitgestellten Grenzwert der Steiggeschwindigkeit des Einfüllmaterials erreicht. Dabei umfasst das Befüllungssystem zumindest ein Fördermittel zum Befördern des Einfüllmaterials und zum Festlegen der Einfüllmenge des Einfüllmaterials. Die zumindest eine Recheneinrichtung oder die App können mit der Steuereinrichtung des Befüllungssystems verbunden sein, sodass bei einer drohenden Überschreitung des Grenzwerts einfach eingeschritten werden kann und die Einfüllmenge des Einfüllmaterials einfach reduzierbar ist. Insbesondere können die zumindest eine Recheneinrichtung oder die App eine Sicherheitslevelabfrage umfassen, sodass die Förderleistung des Fördermittels basierend auf der Sicherheitslevelabfrage drosselbar ist. Beispielsweise umfasst ein Sicherheitslevel der Sicherheitslevelabfrage die aktuelle Steiggeschwindigkeit, wobei die Förderleistung des Fördermittels zumindest auf 90% der aktuellen Förderleistung reduziert wird. Das Sicherheitslevel kann variabel in der zumindest einen Recheneinrichtung oder der App eingestellt werden.

Bevorzugt ist das erfindungsgemässe Verfahren ein computerimplementiertes Verfahren, welches an der zumindest einen Recheneinrichtung oder in der App ausgeführt wird. Dabei werden in der zumindest einen Recheneinrichtung oder in der App Befehlsdaten erstellt und an die Steuereinrichtung gesendet, wobei die Steuereinrichtung eine Ausgabeeinrichtung veranlasst, zumindest das zumindest eine Warnsignal an der Ausgebeeinrichtung auszugeben, wenn die zumindest eine aktuelle Steiggeschwindigkeit des Einfüllmaterials den zumindest einen bereitgestellten Grenzwert der Steiggeschwindigkeit des Einfüllmaterials erreicht. Damit ist das hier beschriebene Verfahren einfach ausführbar und die optische Sensoreinrichtung einstellbar und steuerbar. Die beschriebenen Verfahren sind damit auch an mehreren unterschiedlichen Endgeräten verwendbar, wobei beispielsweise mehrere Arbeitskräfte oder Benutzer über ein tragbares Endgerät verfügen, um auf die Messwerte, Messdaten, berechnete Daten, Befehlsdaten und/oder Parameter zuzugreifen und diese akustisch und/oder visuell mithilfe zumindest eines Warnsignals am tragbaren Endgerät zu erhalten. Insbesondere entsteht somit ein Netzwerk an Endgeräten und Recheneinrichtungen oder Apps, welche zum Austausch der Messwerte, Messdaten, berechnete Daten, Befehlsdaten und/oder Parameter miteinander kommunizieren.

Vorteilhaft wird mithilfe der Befehlsdaten die Schüttlagenhöhenentwicklung graphisch in einer Anzeigeeinrichtung der Ausgabeeinrichtung dargestellt. Vorteilhaft wird mithilfe der Befehlsdaten die aktuelle Steiggeschwindigkeit intervallbezogen in der Anzeigeeinrichtung dargestellt und insbesondere durchschnittlich dargestellt. Damit sind diese Parameter in Echtzeit einfach überwachbar.

Vorteilhaft werden die berechneten aktuellen Steiggeschwindigkeiten je Schüttlagenhöhe graphisch dargestellt. Damit wird eine vereinfachte Visualisierung und ein rasches Vergleichen verschiedener Schüttlagenhöhen miteinander ermöglicht. Beispielsweise wird der Grenzwert zur Steiggeschwindigkeit graphisch in einem Diagramm dargestellt und mit den berechneten Steiggeschwindigkeiten je Schüttlagenhöhe verglichen. Das Diagramm wird dann an der Ausgabeeinrichtung angezeigt. Damit ist mit einem Blick für den Benutzer erkennbar, welche Steiggeschwindigkeiten über der maximal erlaubten Steiggeschwindigkeit lagen und welche darunter lagen.

Vorteilhaft werden zumindest Teile der Messdaten, einzelne Parameter sowie berechnete Daten mithilfe einer Dashboard-Ansicht an der Anzeigeeinrichtung dargestellt. Neben beispielsweise tabellarischen und grafischen Darstellungsformen stehen Dashboards zur Verfügung. Die Dashboards liefern einen schnellen Überblick über höchst relevante Messwerte und Berechnungen aus dem zuvor genannten Verfahren. Beispielsweise lassen sich die intervallbezogene und durchschnittliche aktuelle Steiggeschwindigkeit als Dashboard-Ansichten anzeigen, sodass diese einfach und für die Arbeitskräfte verständlich ablesbar sind.

Insbesondere sind mehrere optische Sensoreinrichtungen vorhanden, welche mit der zumindest einen Recheneinrichtung oder mit der App verbunden sind, sodass das zuvor beschriebene Verfahren an mehreren Positionen an der Schalung ausführbar ist und die Schalung verbessert überwachbar ist. Dies verbessert die Arbeitssicherheit auf der Baustelle zusätzlich und verbessert die Identifikation von Qualitätsmängeln beim Einfüllen des Einfüllmaterials.

Eine erfindungsgemässe Sensoreinrichtung zum Überwachen einer Steiggeschwindigkeit eines Einfüllmaterials umfasst zumindest einen ersten optischen Sensor und eine Befestigungseinrichtung zum Befestigen zumindest des ersten optischen Sensors an einer Schalung, sodass zumindest der erste optische Sensor über einer Schalungsöffnung positionierbar ist. Die optische Sensoreinrichtung ist mit zumindest einer Recheneinrichtung verbunden, wobei die zumindest eine Recheneinrichtung ausgebildet ist, um die aktuellen Steiggeschwindigkeit des Einfüllmaterials bei der Befüllung der Schalung mit dem Einfüllmaterial zumindest mithilfe der Messwerte der optischen Messungen der zumindest einen aktuellen Schüttlagenhöhe, zumindest einem Parameter der Umgebungsbedingungen, insbesondere der Lufttemperatur, einer Referenztemperatur und/oder einer Einbautemperatur, sowie anhand eines Zeitstempels zumindest einer Zeitmessung in zumindest einem Messintervall oder eine Zeitmessvorrichtung zum Ermitteln der Zeitmessung, zu berechnen, wobei zumindest ein Grenzwert für die aktuelle Steiggeschwindigkeit (vB) des Einfüllmaterials in der zumindest einen Recheneinrichtung (41) bereitgestellt ist, wobei der zumindest eine Grenzwert auf dem zumindest einen Parameter der Umgebungsbedingungen basiert. Zusammen mit den optischen Messungen der aktuellen Schüttlagenhöhe des ersten optischen Sensors kann entweder direkt oder indirekt gleichzeitig eine Zeitmessung der Veränderung der Schüttlagenhöhe ermittelt werden, um das bereitgestellte Messintervall zu überwachen. Somit kann ein Zeitstempel in der zumindest einen Recheneinrichtung gesetzt werden, um die aktuelle Steiggeschwindigkeit hochpräzise und in Echtzeit zu bestimmen. Alternativ oder ergänzend kann eine Zeitmessvorrichtung zum Ermitteln der Zeitmessung verwendet werden, sodass eine redundante Messeinrichtung vorhanden ist, um die Zeitmessung weiter zu verbessern und somit die Genauigkeit in der Berechnung der aktuellen Steiggeschwindigkeit zu verbessern.

Der zumindest eine optische Sensor ist insbesondere ein Laser-Abstandssensor, sodass die Schüttlagenhöhe berührungslos messbar ist. Der Laser sendet einen Laserstrahl durch die Schalungsöffnung in die Schalung und bis zum Boden der Schalung, wenn sich kein Einfüllmaterial in der Schalung befindet. Beim Befüllen der Schalung mit dem Einfüllmaterial reicht der Laser nur mehr bis etwa der Oberfläche des Einfüllmaterials, wobei sich die Reichweite des Lasers mit steigender Schüttlagenhöhe in der Schalung weiter verkürzt. Somit misst der Laser die Distanz, von der zumindest einen aktuellen Schüttlagenhöhe des Einfüllmaterials in der Schalung zu der zumindest einen optischen Sensoreinrichtung während der Befüllung des Einfüllmaterials.

Vorteilhaft ist eine Kamera vorhanden, welche an der optischen Sensoreinrichtung angeordnet ist oder Teil der optischen Sensoreinrichtung ist. Die Kamera erfasst die aktuelle Schüttlagenhöhe visuell, sodass Bilder von der aktuellen Schüttlagenhöhe entstehen. Derartige Bilder können von der Kamera leitungslos, beispielsweise via Bluetooth LE ^{®}, oder mithilfe von Datenkabel an die zumindest eine Recheneinrichtung, oder dem App, und in weiterer Folge an eine Anzeigeeinrichtung übermittelt werden, und somit einem Benutzer oder einer Arbeitskraft in Echtzeit zur Verfügung gestellt werden.

Vorzugsweise ist zumindest ein Vibrationssensor vorhanden. Der Vibrationssensor kann einerseits eine Verdichtungsphase während des Befüllvorgangs erkennen und andererseits auch äussere Krafteinwirkungen an der optischen Sensoreinrichtung erkennen. Der Vibrationssensor ist dafür mit der Steuereinrichtung oder mit der zumindest einen Recheneinrichtung zum Datenaustausch von Vibrationsdaten verbunden, sodass die Steuereinrichtung den zumindest einen optischen Sensor mithilfe von Befehlsdaten basierend auf den Vibrationsdaten steuern kann. Damit lässt sich das Messverhalten des zumindest einen optischen Sensors optimieren.

Alternativ oder ergänzend ist zumindest ein Schwingungssensor vorhanden, der die Schwingungen der optischen Sensoreinrichtung und/oder ein Schwingen der Schalung einfach erfasst. Der zumindest eine Schwingungssensor kann mit der zumindest einen Recheneinrichtung zum Datenaustausch verbunden sein. Anhand der erhobenen Schwingungsdaten können Rückschlüsse auf den Verdichtungsgrad im Einfüllmaterial gezogen werden. Insbesondere ist der zumindest eine Schwingungssensor ein Beschleunigungssensor, welcher Schwingungen besonders einfach erfassen kann.

Insbesondere wird mit dem Schwingungssensor zumindest ein Lageparameter der optischen Sensoreinrichtung bestimmt. Damit lässt sich die Neigung bzw. die Orientierung zumindest des ersten Sensors bestimmen, sodass die Distanz, von der zumindest einen aktuellen Schüttlagenhöhe des Einfüllmaterials in der Schalung, zu der zumindest einen optischen Sensoreinrichtung während der Befüllung des Einfüllmaterials zuverlässig bestimmbar ist. Beispielsweise ist damit erkennbar, ob äussere Umwelteinflüsse, wie beispielsweise der Wind, die optische Sensoreinrichtung in Schwingung versetzten.

Alternative oder ergänzend ist zumindest ein Mikrophon vorhanden, um den Luftschall oder den Körperschall an zumindest einem Bauteil der Schalung zu messen. Das zumindest eine Mikrophon kann mit der zumindest einen Recheneinrichtung zum Datenaustausch verbunden sein. Anhand der erhobenen Schallwellen können Rückschlüsse auf den Verdichtungsgrad und die aktuelle Druckbelastung der Schalung gezogen werden.

Insbesondere ist ein KI-Modul vorhanden, sodass die Messwerte zumindest von dem Schwingungssensor, und insbesondere vom Mikrophon, mithilfe einer künstlichen Intelligenz (KI) auswertbar sind. Dabei ist das KI-Modul zumindest ausgebildet, einen Verdichtungsgrad im Einfüllmaterial zu bestimmen. Das KI-Modul kann zumindest ein neuronales Netzwerk als Recheneinheit umfassen oder eine Support Vector Machine oder eine Transformer-Recheneinheit umfassen.

Alternativ oder ergänzend ist zumindest ein Temperatursensor vorhanden, welcher mit der zumindest einen Recheneinrichtung verbunden ist. Der zumindest eine Temperatursensor misst die Temperatur an der Schalung. Die Temperatur an der Schalung kann die maximale Steiggeschwindigkeit des Einfüllmaterials beeinträchtigen, sodass das Messen und danach das Einbeziehen der Temperaturmessung in die Berechnung, die Genauigkeit der Berechnung der maximale Steiggeschwindigkeit verbessert. Dabei kann die Oberflächentemperatur des Einfüllmaterials, die Oberflächentemperatur der Schalungshaut, oder die Oberflächentemperatur an der Aussenseite der Schalung (beispielsweise an der Bewehrung) einzeln oder in Kombination aus mehreren Messungen zur Berechnung der maximale Steiggeschwindigkeit verwendet werden. Je mehr Temperaturparameter gemessen werden und in die Berechnung einbezogen werden, umso genauer kann die maximale Steiggeschwindigkeit des Einfüllmaterials berechnet werden, sodass die Arbeitskräfte auf der Baustelle, wenn nötig, in Echtzeit mithilfe des zumindest einen Warnsignals gewarnt sind. Darüber hinaus kann damit sichergestellt werden, dass eine einheitliche Farbgebung in der fertigen Bausubstanz vorhanden ist.

Alternativ oder ergänzend ist zumindest ein weiterer Temperatursensor vorhanden, welcher mit der zumindest einen Recheneinrichtung verbunden ist. Der zumindest eine weitere Temperatursensor misst die Umgebungstemperatur. Die Umgebungstemperatur kann die maximale Steiggeschwindigkeit des Einfüllmaterials beeinträchtigen, sodass das Messen und danach das Einbeziehen der Temperaturmessung in die Berechnung, die Genauigkeit der Berechnung der aktuellen Steiggeschwindigkeit weiter verbessert. Das Messen der Umgebungstemperatur kann auch einen Rückschluss auf die Temperatur des Einfüllmaterials vor dem Befüllen der Schalung liefern, sodass sich die aktuelle Steiggeschwindigkeit verbessert berechnen lässt.

Alternativ oder ergänzend ist zumindest ein Feuchtigkeitssensor vorhanden, welcher mit der zumindest einen Recheneinrichtung verbunden ist. Der zumindest eine Feuchtigkeitssensor misst die Umgebungsluftfeuchte. Die Umgebungsluftfeuchte kann die maximale Steiggeschwindigkeit des Einfüllmaterials beeinträchtigen, sodass das Messen und danach das Einbeziehen der Feuchtemessung in die Berechnung, die Genauigkeit der Berechnung der aktuellen Steiggeschwindigkeit verbessert.

Bevorzugterweise ist eine Steuereinrichtung vorhanden, die mit der zumindest einen Recheneinrichtung verbunden ist, und die zum Austausch von Sensordaten und Befehlsdaten zumindest mit dem zumindest einen ersten optischen Sensor verbunden ist. Der zumindest eine optische Sensor lässt sich, wie hier vorliegend beschrieben, mit der Steuereinrichtung einfach steuern.

Bevorzugt ist die zumindest eine Recheneinrichtung ausgebildet, auf Basis der Messwerte aus zumindest einem der zuvor genannten Sensoren eine maximale Steiggeschwindigkeit zu berechnen. Damit ist die Schalung schnellstmöglich befüllt und die Arbeitssicherheit auf der Baustelle sowie eine hinreichende Qualität der Bauwerkswand ist gewährleistet.

Insbesondere ist eine Speichereinrichtung vorhanden, welche mit der zumindest einen Recheneinrichtung mithilfe von Datenleitungen oder leitungslos zum Austausch von Daten verbunden ist. Die Speichereinrichtung kann einen Server und eine Cloud umfassen, an der die Messwerte, Messdaten, Befehlsdaten, Parameter oder berechneten Daten zentral oder dezentral sicher hinterlegbar sind.

Insbesondere ist die Steuereinrichtung ein Mikrokontroller. Mikrokontroller sind typischerweise sehr kleine Computer, die auf einem einzigen Chip aufgebracht sind und ein vollständig in sich geschlossenes System bilden. Ein Mikrocontroller ist ein kompakter integrierter Schaltkreis, der zur Steuerung einer bestimmten Operation in einem eingebetteten System entwickelt wurde. Ein typischer Mikrocontroller umfasst einen Prozessor, einen Speicher und Ein-/Ausgabe-Peripheriegeräte (E/A) auf einem einzigen Chip. Ein Mikrokontroller ist eine CPU am Chip und umfasst zusätzliche Peripherie, wie Speicher, Portbausteine, Zeitgeber, etc. Somit kann die Steuereinrichtung sehr klein gehalten werden, sodass die Sensoreinrichtung leicht gebaut ist.

Vorzugsweise veranlasst die Steuereinrichtung eine Ausgabeeinrichtung das zumindest eine Warnsignal akustisch an der Ausgabeeinrichtung auszugeben, insbesondere wenn die zumindest eine aktuelle Steiggeschwindigkeit des Einfüllmaterials den zumindest einen bereitgestellten Grenzwert der Steiggeschwindigkeit des Einfüllmaterials erreicht. Damit werden die auf der Baustelle anwesenden Personen (Arbeitskräfte, Benutzer, Zulieferer etc.) in Echtzeit akustisch gewarnt. Eine Ausgabeeinrichtung für das akustische Warnsignal kann eine Hupe oder ein Lautsprecher sein. Mithilfe des akustischen Warnsignals ist ein rasches Agieren möglich, wodurch die Qualität der Bauwerksoberflächen steigt. Die Ausgabeeinrichtung kann an einer Baustelleneinrichtung, wie beispielsweise an der Schalung oder an einem Baustellenkran, angeordnet sein, und das akustische Warnsignal mittels eines Lautsprechers bzw. einer Hupe ausgeben.

Alternativ oder ergänzend veranlasst die Steuereinrichtung eine Ausgabeeinrichtung, das zumindest eine Warnsignal visuell an der Ausgabeeinrichtung auszugeben, insbesondere wenn die zumindest eine aktuelle Steiggeschwindigkeit des Einfüllmaterials den zumindest einen bereitgestellten Grenzwert der Steiggeschwindigkeit des Einfüllmaterials erreicht. Damit werden die auf der Baustelle anwesenden Personen (Arbeitskräfte, Benutzer, Zulieferer) in Echtzeit visuell gewarnt. Die Ausgabeeinrichtung kann eine Anzeigeeinrichtung umfassen, wobei das visuelle Warnsignal ein Lichtsignal sein kann. Das visuelle Warnsignal kann als einfach blinkendes Warnsignal oder als ein Warnelement in einer Graphik dargestellt sein. Mithilfe des visuellen Warnsignals ist ein rasches Agieren möglich, wodurch die Qualität der Bauwerksoberflächen steigt. Die Ausgabeeinrichtung kann an einer Baustelleneinrichtung, wie beispielsweise an der Schalung oder an einem Baustellenkran, angeordnet sein, und das visuelle Warnsignal als Lichtsignal ausgeben.

Alternativ oder ergänzend kann die Ausgabeeinrichtung auch als Vibrationsarmband ausgeführt sein, sodass dieses am Handgelenk eines Benutzers anliegt. Damit kann der Benutzer direkt mittels Vibrationen über das Erreichen des bereitgestellten Grenzwerts von der aktuellen Steiggeschwindigkeit informiert werden.

Ein erfindungsgemässes Computerprogrammprodukt umfassend Programmbefehle, welche ausgebildet sind, zumindest ein zuvor genanntes Verfahren auszuführen. Das Computerprogrammprodukt kann Befehlsdaten, berechnete Daten und Parameter, wie zuvor beschrieben umfassen.

Ein erfindungsgemässes computerlesbares Medium umfasst zumindest ein Computerprogrammprodukt, das bei der Ausführung durch zumindest eine Recheneinrichtung dieses veranlasst, zumindest ein zuvor genanntes Verfahren durchzuführen. Das computerlesbare Medium kann Befehlsdaten, Messdaten, berechnete Daten, Messwerte und Parameter, wie zuvor beschrieben umfassen.

Ein erfindungsgemässes Sensorkontrollsystem umfasst zumindest eine zuvor beschriebene Sensoreinrichtung sowie zumindest ein elektrisches Endgerät mit einem zuvor beschriebenen Computerprogrammprodukt. Das zumindest eine elektrische Endgerät kann ein tragbares elektrisches Endgerät sein, wie zuvor beschrieben. Das Sensorkontrollsystem kann auch mehrere elektrische Endgeräte umfassen, sowie eine Speichereinrichtung, wie zuvor beschrieben.

Die Verwendung des beschriebenen Sensorkontrollsystems bei der Herstellung von Bauwerken führt zu einer wesentlich höheren Qualität des Endproduktes, weil in Echtzeit auf zu schnelles Befüllen der Schalung bzw. ungleichmässige Schüttlagenhöhen reagiert werden kann. Auf diese Weise verbessert die ausführende Baufirma die Arbeitssicherheit und reduziert in weiterer Folge den Anteil an kostenintensiven Verbesserungsmassnahmen, welche im schlimmsten Fall sogar den Abriss des Bauteils inklusive einer erneuten Herstellung beinhalten. Das beschriebene Verfahren und das Sensorkontrollsystem unterstützen somit auch die Ressourcenschonung und tragen zur Vermeidung unnötiger CO2-Emissionen bei. Darüber hinaus wird eine höhere Qualität geliefert, bei gleicher Arbeitsleistung der Arbeitskräfte, sodass die Zufriedenheit der Arbeitskräfte steigt und die Attraktivität der Arbeit aufgrund der Digitalisierung des Befüllvorgangs steigt, sodass zukünftig neue Arbeitskräfte auffindbar sind. Dies wirkt gegen einen Fachkräftemangel im Bauwesen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an. Mittels der nachfolgenden Figuren wird anhand von Ausführungsbeispielen die Erfindung näher erläutert. Positionsangaben, wie "oben", unten", "rechts" oder "links" sind jeweils auf die entsprechenden Darstellungen bezogen und sind nicht als einschränkend zu verstehen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Patentansprüche zu verlassen.

Im Weiteren schliesst der Ausdruck "umfassen" und Ableitungen davon andere Elemente oder Schritte nicht aus. Ebenfalls schliesst der unbestimmte Artikel "ein" beziehungsweise "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Patentansprüchen sind nicht als den Umfang der Patentansprüche einschränkend zu verstehen.

### Figurenbeschreibung

Die Figuren werden zusammenhängend und übergreifend beschrieben. Gleiche Bezugszeichen bedeuten gleiche Bauteile. Es zeigen
Fig. 1: ein erstes erfindungsgemässes Verfahren zum Überwachen einer Steiggeschwindigkeit in einem vereinfachten Flussdiagramm;
Fig. 2: das Verfahren gemäss Fig. 1 in einer schematischen Darstellung in einem erfindungsgemässen Sensorkontrollsystem mit einem Schalungsausschnitt (a), einem elektronischen Endgerät (b), einer Cloud (c), eine Graphik zur Schüttlagenhöhenentwicklung (d) und Dashboard Anzeigen (e);
Fig. 3: das Verfahren gemäss Fig. 2 in einer schematischen Darstellung mit einer Schalung (a) und einer Schüttlagenhöhenentwicklung über die gesamte Schalung (b);
Fig. 4: eine weitere Ausführungsform des Verfahrens gemäss Fig. 1 in einer schematischen Darstellung mit einem erfindungsgemässen Sensorkontrollsystem mit einer Schalung (a), einem ersten elektronischen Endgerät (b), einer Cloud (c), und einem weiteren elektronischen Endgerät (d);
Fig. 5: zeigt einen Vergleich unterschiedlicher möglicher Grenzwerte gemäss dem Verfahren in Fig. 1, wobei die aktuelle Steiggeschwindigkeit einer Schüttlage mithilfe der Pfeile dargestellt ist;
Fig. 6: eine erfindungsgemässe optische Sensoreinrichtung, und
Fig. 7: die optische Sensoreinrichtung gemäss Fig. 6 in einem schematischen Blockschaltbild.

### Ausführung der Erfindung

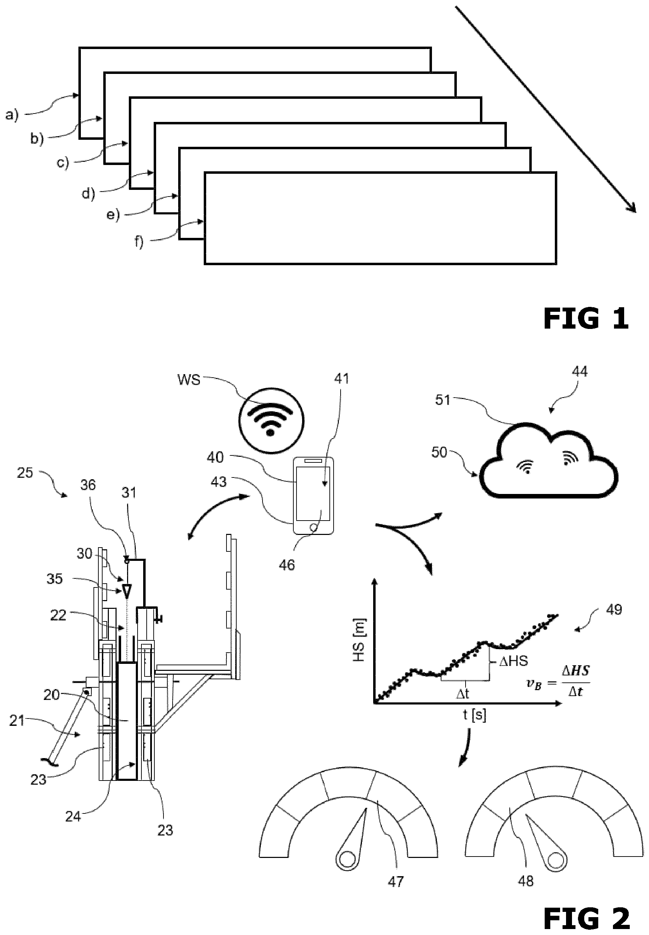

Die Figuren 1 bis 3 zeigen eine erste Ausführungsform eines erfindungsgemässen Verfahrens zum Überwachen einer Steiggeschwindigkeit von Frischbeton 20 als Einfüllmaterial in einer vertikal befüllbaren Schalung 21 in einem Sensorkontrollsystem 25, umfassend mehrere optische Sensoreinrichtungen 30, welche horizontal entlang der Schalung 20 im Bereich der Schalungsöffnung 22 angeordnet sind. Weiters ist ein Mobiltelefon 40 gezeigt, welches eine Recheneinrichtung 41 und eine App 42 aufweist. Das Verfahren umfasst zumindest die folgenden Schritte:
a) Bereitstellen zumindest eines Grenzwertes GW für die Steiggeschwindigkeit des Frischbetons in der Recheneinrichtung 41;
b) Bereitstellen von Messintervallen für optische Messungen mit den optischen Sensoreinrichtungen 30 in der Recheneinrichtung 41, wobei die Messintervalle von einer Konsistenzinformation des Frischbeton 20 abhängig sind;
c) Befüllen der Schalung mit dem Frischbeton 20;
d) Durchführen von optischen Messungen mit den optischen Sensoreinrichtungen 30 zu zumindest einer aktuellen Schüttlagenhöhe HS des Frischbetons 20 in der Schalung 21 während der Befüllung der Schalung 21 mit dem Frischbeton 20;
e) Berechnen der aktuellen Steiggeschwindigkeit v_{B} des Frischbetons 20 bei der Befüllung der Schalung 21 mit dem Frischbeton 20 zumindest mithilfe der Messwerte der optischen Messungen der aktuellen Schüttlagenhöhe HS sowie zumindest einer Zeitmessung t im zumindest einen Messintervall in der Recheneinrichtung 41;
f) Ausgabe zumindest eines akustischen und/oder visuellen Warnsignals WS, wenn die aktuelle Steiggeschwindigkeit v_{B} des Frischbetons 20 den zumindest einen bereitgestellten Grenzwert GW der Steiggeschwindigkeit des Frischbetons 20 erreicht.

Als Konsistenzinformation wird die Konsistenzklasse des Frischbetons 20 in der App 42 von einem Benutzer ausgewählt. Die Konsistenz des Frischbetons 20 ist ein Mass für die Steifigkeit des Frischbetons 20 und definiert seine Verarbeitbarkeit. Beispielweise ist die Konsistenzklasse für fliessfähigen Frischbeton 20 in der App 42 ausgewählt. Alternative zum Frischbeton 20 umfasst die App 42 auch Konsistenzklassen für Mörtel, Estrich oder Asphalt als Einfüllmaterial.

Der in Schritt a) bereitgestellte Grenzwert GW der Steiggeschwindigkeit wird anhand individueller Parameter in der App 42 eingestellt und umfasst die Rohdichte des Frischbetons 20, die Konsistenzklasse, die Frischbetontemperatur, die Art der Schalung 21, Sichtbetonanforderungen, wie beispielsweise eine Farbgebung, die Höhe der Bauteile 23 in der Schalung 21, und die Zusammensetzung des Frischbetons 20.

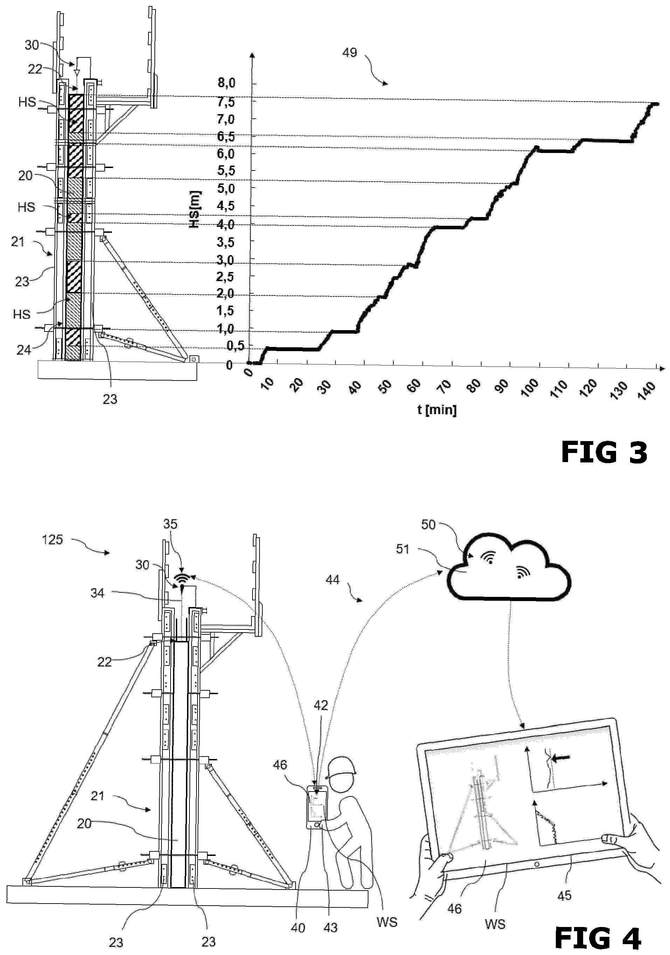

Die Messintervalle in Schritt b) werden anhand der Konsistenzklasse des Frischbetons 20 und der Anzahl der optischen Sensoreinrichtungen 30 bei dem zu befüllenden Bauteil 23 bestimmt und in die Recheneinrichtung 41 eingegeben. Die Messintervalle liegen zwischen 0 und 50 Sekunden, wobei damit unterschiedliche Schüttlagenhöhen HS in der Schalung 20 bestimmt werden, welche übereinander angeordnet sind - siehe Figur 3a. Dabei korrelieren die Messintervalle mit vordefinierten Schüttlagengrenzhöhen je gewünschter Schüttlagenhöhe HS in den Bauteilen 23 der Schalung 21. Somit lassen sich die Bauteile 23 parametrisieren und das Einfüllen mit dem Frischbeton 20 verbessert steuern. Beim Einfüllen können einem Bauteil 23 mehrere Schüttlagengrenzhöhen zugeordnet sein, wobei eine unterschiedliche aktuelle Steiggeschwindigkeit v_{B} je nach Schüttlagengrenzhöhe in den Messintervallen erlaubt ist und wobei jeder Schüttlagengrenzhöhe in dem Bauteil 23 ein festgelegter Grenzwert GW der Steiggeschwindigkeit vorliegt.

Die Steuereinrichtungen 35 der Sensoreinrichtungen 30 sind mit dem Mobiltelefon 40 leitungslos zum Austausch von Sensordaten und Steuerdaten verbunden, wobei die App 42 die optischen Sensoreinrichtungen 30 mithilfe der Steuereinrichtungen 35 steuert. Die Messwerte der optischen Messungen werden von den Steuereinrichtungen 35 an das Mobiltelefon 40 übermittelt und an einer Ausgabeeinrichtung, beispielsweise dem Display 46, dargestellt. Das Mobiltelefon 40 weist auch eine Speichereinrichtung 43 auf, in dem die Sensordaten und Steuerdaten gespeichert sind. Die App 42 übermittelt die Messwerte, Steuerdaten, Messintervalle usw. über ein Mobilfunknetz 44 an eine Dokumentationsplattform 50. Die Dokumentationsplattform 50 ist in einer Cloud 51 gespeichert.

Das Einfüllen des Frischbetons 20 in Schritt c) erfolgt in der Regel mithilfe eines Befüllungssystems und mit einem Fördermittel, welches stationär auf einer Baustelle positioniert ist, oder der Frischbeton 20 wird mithilfe eines Lastkraftwagens angeliefert und vom Lastkraftwagen in die Schalungsöffnung 22 der Schalung 21 gefördert - nicht gezeigt.

Die optischen Messungen in Schritt d) umfassen das kontinuierliche Messen einer aktuellen Distanz, von der zumindest einen aktuellen Schüttlagenhöhe HS des Frischbetons 20 in der Schalung 21, zu den optischen Sensoreinrichtungen 30 während der Befüllung. Mithilfe der optischen Sensoreinrichtungen 30 wird beim Messen der Distanz gleichzeitig eine Zeitmessung t der Veränderung der aktuellen Schüttlagenhöhe HS ermittelt, um die bereitgestellten Messintervalle zu überwachen. Somit wird ein Zeitstempel in der zumindest einen Recheneinrichtung 41 gesetzt, um die aktuelle Steiggeschwindigkeit v_{B} hochpräzise und in Echtzeit zu bestimmen.

In dieser Ausführungsform des erfindungsgemässen Verfahrens wird die Berechnung der aktuellen Steiggeschwindigkeit v_{B} in Schritt e) mit den Messwerten der optischen Messung und der Zeitmessung t durchgeführt, wobei der Mittelwert der letzten 5 bis 20 optischen Messwerte verwendet wird. Dabei werden in der Berechnung verschiedene vorab definierte Bandbreiten zur Elimination von Ausreissern der Messwerte verwendet. Die aktuelle Steiggeschwindigkeit v_{B} wird intervallbezogen und durchschnittlich berechnet und in der App 42 graphisch animiert als Dashboard-Ansicht 47, 48 dargestellt - siehe Figur 2e). Ebenfalls wird die zeitliche Schüttlagenhöhenentwicklung 49 berechnet und graphisch in der App 42 dargestellt - siehe Figur 2d) und Figur 3b). Dabei ist auf der Abszisse die Einfüllzeit des Frischbetons 20 und auf der Ordinate die aktuelle Schüttlagenhöhe HS gezeigt. Die Schüttlagenhöhenentwicklung 49 zeigt die Schüttlagen im Befüllvorgang als einzelne konstante Plateaus. Die Schüttlagenhöhenentwicklung 49 wird zumindest einem Bauteil des Bauwerkszugeordnet. Damit kann ein historischer Ablaufplan zum Befüllvorgang des Bauwerkbauteils erstellt werden, sodass eine ausreichend detaillierte Dokumentation erstellt ist.

In ergänzenden Ausführungsformen des Verfahrens gemäss den Figuren 1 bis 3 ist in Figur 4 ein weiteres Sensorkontrollsystem 125 gezeigt, in welchem das ergänzende Verfahren umsetzbar ist. Das Sensorkontrollsystem 125 weist im Wesentlichen dieselben funktionellen und strukturellen Merkmale wie das Sensorkontrollsystem 25 auf, wobei sich ein weiteres Endgerät 45 im Sensorkontrollsystem 125 befindet. Dabei werden vor dem Schritt a) mehrere Parameter der Schalung 21 und den Umgebungsbedingungen in der App 42 bereitgestellt, welche in der Berechnung der aktuellen Steiggeschwindigkeit v_{B} berücksichtigbar werden. Dazu zählt zumindest eine Höhe der Schalung 21 sowie zumindest ein Materialparameter des Frischbetons 20 und einzelne weitere Parameter, wie die Rohdichte des Frischbetons 20, eine Frischbetontemperatur, eine Erstarrungszeit, eine Art des Verdichtens des Frischbetons 20, ein Erstarrungsende bei einer Referenztemperatur. Zusätzlich wird in der App auch die Lufttemperatur, eine Referenztemperatur, eine Einbautemperatur, eine Art der Schalung 21 oder eine Oberflächenbeschaffenheit der Schalungshaut 24 bereitgestellt. Die App 42 übermittelt die Messwerte über ein Mobilfunknetz 44 an eine Dokumentationsplattform 50, um diese dort hinsichtlich Dokumentationsanforderungen entsprechend aufzubereiten - siehe Figur 4. Die Dokumentationsdaten sowie die Messdaten und berechneten Daten können an das weitere Endgerät 45 einem weiteren Benutzer bereitgestellt werden, indem das weitere Endgerät 45 mit der Dokumentationsplattform 50 verbunden wird.

In einer ergänzenden Ausführungsform der zuvor genannten Verfahren gemäss den Figuren 1 bis 3 oder Figur 4 wird die Verdichtungsphase des Frischbetons 20 sowie der Verdichtungsgrad des Frischbetons 20 bestimmt. Zusätzlich wird die Temperatur an der Schalung 21, die Umgebungsluftfeuchte und die Umgebungstemperatur vor dem Berechnen der aktuellen Steiggeschwindigkeit v_{B} gemessen.

In einer ergänzenden Ausführungsform der zuvor genannten Verfahren gemäss den Figuren 1 bis 3 oder Figur 4 wird eine Unterbrechung der Befüllung mithilfe zumindest einigen Messwerten der optischen Messung identifiziert. Die Messwerte der optischen Messung lassen eine unveränderte aktuelle Schüttlagenhöhe v_{B} über mehrere Messpunkte erkennen, sodass auf eine Unterbrechung der Befüllung geschlossen werden kann.

In einer ergänzenden Ausführungsform der zuvor genannten Verfahren gemäss den Figuren 1 bis 3 oder Figur 4 wird das Messverhalten der optischen Sensoreinrichtung 30 unter Berücksichtigung des Ladezustandes der Energieversorgung für die optische Sensoreinrichtung 30 abgestimmt.

In einer ergänzenden Ausführungsform der zuvor genannten Verfahren gemäss den Figuren 1 bis 3 oder Figur 4 wird ein Befüllungssystem zum Befüllen der Schalung 21 mit dem Frischbeton 20 gesteuert, wenn die zumindest eine aktuelle Steiggeschwindigkeit v_{B} des Frischbetons 20 den zumindest einen bereitgestellten Grenzwert GW der Steiggeschwindigkeit erreicht. Dabei umfasst das Befüllungssystem zumindest ein Fördermittel zum Befördern des Frischbetons 20. Die zumindest eine Recheneinrichtung 41 oder die App 42 können mit einer Steuereinrichtung des Befüllungssystems verbunden sein, sodass bei einer drohenden Überschreitung des Grenzwerts GW der Steiggeschwindigkeit einfach eingeschritten wird und die Einfüllmenge des Frischbetons 20 reduzierbar wird. Dabei umfasst die App 42 eine Sicherheitslevelabfrage, sodass die Förderleistung des Fördermittels basierend auf der Sicherheitslevelabfrage drosselbar wird. Das Sicherheitslevel der Sicherheitslevelabfrage umfasst die aktuelle Steiggeschwindigkeit v_{B}, wobei die Förderleistung des Fördermittels auf zumindest 90% der aktuellen Förderleistung reduziert wird.

In einer ergänzenden Ausführungsform der zuvor genannten Verfahren sind diese als computerimplementierte Verfahren ausgeführt, welche an der zumindest einen Recheneinrichtung 41 oder in der App 42 ausgeführt werden. Dabei werden in den Recheneinrichtungen 41 oder in der App 42 Befehlsdaten erstellt und an die Steuereinrichtung 35 gesendet, wobei die Steuereinrichtung 35 eine Anzeigeeinrichtung einer Ausgabeeinrichtung, wie das Display 46, veranlasst, um zumindest das Warnsignal WS an der Anzeigeeinrichtung auszugeben, wenn die zumindest eine aktuelle Steiggeschwindigkeit v_{B} des Füllbetons 20 den zumindest einen bereitgestellten Grenzwert GW der Steiggeschwindigkeit des Füllbetons 20 erreicht.

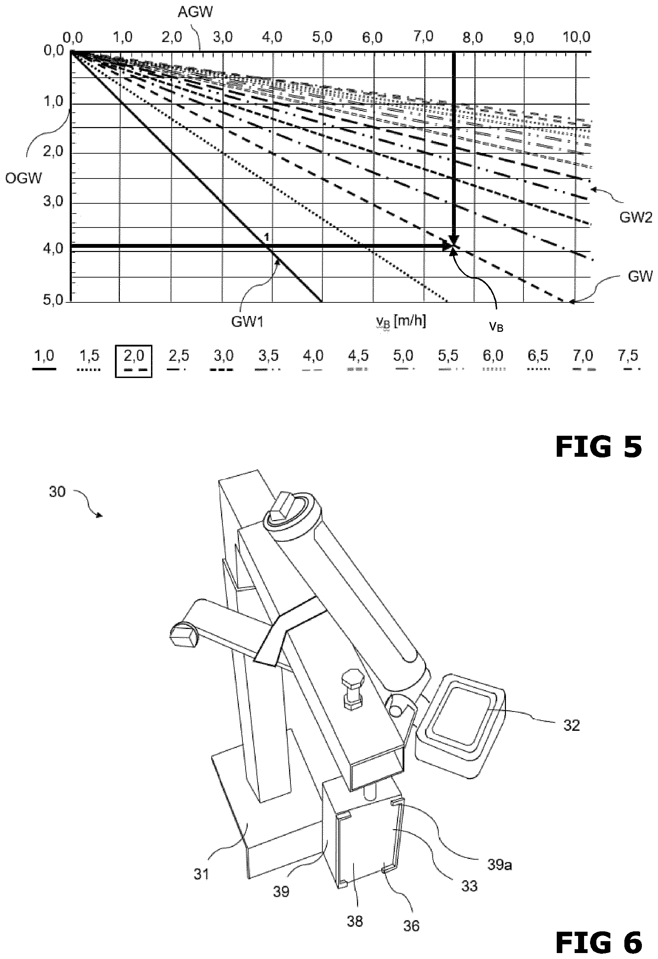

Figur 5 zeigt ein Diagramm mit einer aktuellen Steiggeschwindigkeiten v_{B} einer Schüttlage, wobei auf der Abszisse AGW die Schüttlagenhöhe HS angegeben ist und an der Ordinate OGW die Dauer des Befüllvorgangs beim Befüllen der Schalung 21 mit dem Frischbeton 20 angegeben ist. Die beiden Pfeile im Diagramm zeigen die aktuelle Steiggeschwindigkeit v_{B}, wobei sich diese am festgelegten Grenzwert GW befindet. Der festgelegte Grenzwert GW zur Steiggeschwindigkeit ist als strichlierte Linie dargestellt. Weitere mögliche Grenzwerte GW1, GW2 für andere Steiggeschwindigkeiten v_{B1}, v_{B2} sind in den darüberliegenden oder darunterliegenden Linien dargestellt und können in der App 42 oder in der Recheneinrichtung 41 zur Auswahl durch den Benutzer hinterlegt sein. Eine weitere Steiggeschwindigkeit v_{B} kann mit weiteren Pfeilen im selben Diagramm dargestellt werden.

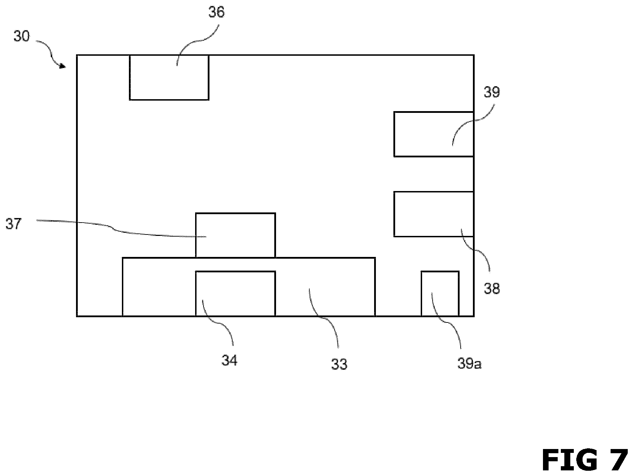

Figur 6 und Figur 7 zeigen eine Ausführungsform der optischen Sensoreinrichtung 30 zum Überwachen der Steiggeschwindigkeit eines Frischbetons 20 umfassend samt zumindest einem Laser-Abstandssensor 33 und eine Befestigungseinrichtung 31 zum Befestigen zumindest des Laser-Abstandssensors 33 an einer Schalung 21, sodass zumindest der Laser-Abstandssensor 33 über der Schalungsöffnung 22 positionierbar ist. Die optische Sensoreinrichtung 30 ist kabellos mit der Recheneinrichtung 41 verbunden, wobei die Recheneinrichtung 41 ausgebildet ist, eine aktuelle Steiggeschwindigkeit v_{B} des Frischbetons 20 bei der Befüllung der Schalung 21 mit dem Frischbeton 20 zumindest mithilfe der Messwerte der optischen Messungen der zumindest einen aktuellen Schüttlagenhöhe HS sowie zumindest einer Zeitmessung t in zumindest einem Messintervall zu berechnen, wie zuvor in den Verfahren beschrieben. Der Laser-Abstandssensor 33 misst die Schüttlagenhöhe HS berührungslos. Der Laser 34 sendet einen Laserstrahl durch die Schalungsöffnung 22 in die Schalung 21 bis zum Boden der Schalung 21, wenn sich kein Frischbeton 20 in der Schalung 21 befindet. Beim Befüllen der Schalung 21 mit dem Frischbeton 20 reicht der Laserstrahl nur mehr bis etwa der Oberfläche des Frischbetons 20, wobei sich die Reichweite des Laserstrahls mit steigender Schüttlagenhöhe in der Schalung 20 weiter verkürzt. Somit misst der Laser 34 die Distanz von der zumindest einen aktuellen Schüttlagenhöhe HS des Frischbetons 20 in der Schalung 21 zum Laser-Abstandssensor 33 während der Befüllung des Frischbetons 20.

Die Steuereinrichtung 35 ist als Mikrokontroller 36 ausgebildet, der mit der Recheneinrichtung 41 oder der App 42 verbunden ist, um den Austausch von Sensordaten und Befehlsdaten zumindest mit dem Laser-Abstandssensor 33 zu gewährleisten. Der Mikrocontroller 36 umfasst einen Prozessor, einen Speicher und Ein-/Ausgabe-Peripheriegeräte (E/A) auf einem einzigen Chip.

Der Mikrokontroller 35 veranlasst die Ausgabeeinrichtung am Mobiltelefon 41 das Warnsignal WS akustisch und visuell anzuzeigen, wenn die zumindest eine aktuelle Steiggeschwindigkeit v_{B} des Frischbetons 20 den zumindest einen bereitgestellten Grenzwert GW der Steiggeschwindigkeit des Frischbetons 20 erreicht. Als Ausgabeeinrichtung für das akustische Warnsignal WS ist ein Lautsprecher am Mobiltelefon 40 vorhanden und als Anzeigeeinrichtung für das visuelle Warnsignal WS ist ein Lichtsignal vorhanden.

Darüber hinaus ist eine Speichereinrichtung 37 in der optischen Sensoreinrichtung 30 vorhanden, welche mit der Recheneinrichtung 41 und/oder mit der App 42 mithilfe von Datenleitungen oder leitungslos zum Austausch von Daten verbunden ist.

Neben dem Laser-Abstandssensor 33 ist eine Kamera 32 an der Befestigungseinrichtung 31 angeordnet. Die Kamera 32 erfasst die aktuelle Schüttlagenhöhe v_{B} visuell, sodass Bilder von der aktuellen Schüttlagenhöhe v_{B} entstehen. Derartige Bilder können von der Kamera 32 leitungslos, beispielsweise via Bluetooth LE ^{®}, an die App 42 und damit an eine Anzeigeeinrichtung, wie an das Display 46, übermittelt werden.

Zusätzlich ist ein Vibrationssensor 38 vorhanden. Der Vibrationssensor 38 ist in der optischen Sensoreinrichtung 30 angeordnet und erkennt einerseits eine Verdichtungsphase während des Befüllvorgangs und andererseits erkennt dieser auch äussere Krafteinwirkungen an der optischen Sensoreinrichtung 30. Der Vibrationssensor 38 ist dafür mit der Steuereinrichtung 35 zum Datenaustausch von Vibrationsdaten verbunden.

Weiters ist ein Beschleunigungssensor 39 als Schwingungssensor in der optischen Sensoreinrichtung 30 angeordnet, der ein Schwingen der optischen Sensoreinrichtung 30 und/oder ein Schwingen der Schalung 21 einfach erfasst. Der zumindest eine Schwingungssensor ist mit der App 42 zum Datenaustausch verbunden. Weiters wird mit dem Schwingungssensor zumindest ein Lageparameter der optischen Sensoreinrichtung 30 bestimmt. Damit lässt sich die Neigung bzw. die Orientierung zumindest des Laser-Abstandssensors 33 bestimmen. Darüber hinaus ist ein Mikrophon 39a in der optischen Sensoreinrichtung 30 angeordnet, um akustische Schallwellen zu empfangen.

In einer ergänzenden Ausführungsform der zuvor genannten optischen Sensoreinrichtung gemäss der Figur 6 ist ein KI-Modul vorhanden, welches mit der Recheneinrichtung 41 und der App 42 verbunden ist, sodass die Messwerte von zumindest dem Schwingungssensor und von dem Mikrophon 39a mithilfe einer künstlichen Intelligenz (KI) auswertbar sind. Dabei ist das KI-Modul zumindest ausgebildet, einen Verdichtungsgrad im Frischbeton 20 zu bestimmen. Das KI-Modul umfasst zumindest ein neuronales Netzwerk als Recheneinheit - nicht gezeigt.

In einer ergänzenden weiteren Ausführungsform der zuvor genannten optischen Sensoreinrichtung gemäss der Figur 6 ist ein Temperatursensor zum Messen der Temperatur an der Schalung 21 vorhanden, wobei der Temperatursensor ein Infrarottemperatursensor ist und die Temperatur der Frischbetonoberfläche, in der Schalungshaut 23 und der Bewehrungsoberfläche eingesetzt wird. Darüber hinaus sind ein Umgebungstemperatursensor und ein Feuchtesensor zum Messen der relativen Luftfeuchte vorhanden.

Im Mobiltelefon 40, in einem Computer oder einem anderen Endgerät ist ein Computerprogrammprodukt hinterlegt, dass Programmbefehle umfasst, welche ausgebildet sind, zumindest ein zuvor genanntes Verfahren auszuführen. Das Computerprogrammprodukt kann Befehlsdaten, berechnete Daten und Parameter, wie zuvor beschrieben umfassen.

Weiters ist ein computerlesbares Medium vorhanden, dass zumindest ein Computerprogrammprodukt umfasst, das bei der Ausführung durch zumindest eine Recheneinrichtung 41 oder in der App 42 diese veranlasst, zumindest ein zuvor genanntes Verfahren durchzuführen.

### Bezugszeichenliste

- 20: Frischbeton
- 21: Schalung
- 22: Schalungsöffnung
- 23: Bauteile von 21
- 24: Schalungshaut
- 25: Sensorkontrollsystem
- 30: optische Sensoreinrichtungen
- 31: Befestigungseinrichtung
- 32: Kamera
- 33: Laser-Abstandssensor
- 34: Laser
- 35: Steuereinrichtung
- 36: Mikrokontroller
- 37: Speichereinrichtung
- 38: Vibrationssensor
- 39: Beschleunigungssensor / Schwingungssensor
- 39a: Mikrophon
- 40: Mobiltelefon
- 41: Recheneinrichtung
- 42: Software-Applikation (App)
- 43: Speichereinrichtung
- 44: Mobilfunknetz
- 45: weiteres Endgerät
- 46: Display / Anzeigeeinrichtung/ Ausgabeeinrichtung
- 47: Dashborad-Ansicht für v_{B} (intervallbezogen)
- 48: Dashborad-Ansicht für v_{B} (durchschnittlich)
- 49: Schüttlagenhöhenentwicklung
- 50: Dokumentationsplattform
- 51: Cloud
- 125: Sensorkontrollsystem
- GW: Grenzwerte
- v_{B}: Steiggeschwindigkeiten
- HS: Schüttlagenhöhe
- WS: Warnsignal
- AGW: Abszisse
- OGW: Ordinate
- t: Zeitmessung

## Patentansprüche

1. Verfahren zum Überwachen einer Steiggeschwindigkeit eines Einfüllmaterials, insbesondere von Frischbeton (20), in einer vertikal befüllbaren Schalung (21) mit zumindest einer optischen Sensoreinrichtung (30) und einer Recheneinrichtung (41) umfassend zumindest die folgenden Schritte:
a) Bereitstellen zumindest eines Grenzwertes für die Steiggeschwindigkeit des Einfüllmaterials in der zumindest einen Recheneinrichtung (41), wobei der zumindest eine Grenzwert zumindest auf einem Parameter der Umgebungsbedingungen, insbesondere der Lufttemperatur, einer Referenztemperatur und/oder einer Einbautemperatur, basiert;
b) Bereitstellen zumindest eines Messintervalls für eine optische Messung mit der optischen Sensoreinrichtung (30) in der zumindest einen Recheneinrichtung (41), wobei insbesondere das zumindest eine Messintervall von einer Konsistenzinformation des Einfüllmaterials abhängig ist;
c) Befüllen der Schalung (21) mit dem Einfüllmaterial;
d) Durchführen von optischen Messungen mit der optischen Sensoreinrichtung (30) zu zumindest einer aktuellen Schüttlagenhöhe (HS) des Einfüllmaterials in der Schalung (21) während der Befüllung der Schalung (21) mit dem Einfüllmaterial;
e) Berechnen der aktuellen Steiggeschwindigkeit (v_{B}) des Einfüllmaterials bei der Befüllung der Schalung (21) mit dem Einfüllmaterial zumindest mithilfe der Messwerte der optischen Messungen der zumindest einen aktuellen Schüttlagenhöhe (HS), dem zumindest einen Parameter der Umgebungsbedingungen, sowie zumindest einer Zeitmessung (t) im zumindest einen Messintervall in der zumindest einen Recheneinrichtung (41), wobei dafür ein Zeitstempel in der zumindest einen Recheneinrichtung (41) gesetzt wird oder eine Zeitmessvorrichtung zum Ermitteln der Zeitmessung verwendet wird;
f) Ausgabe zumindest eines Warnsignals (WS), wenn die zumindest eine aktuelle Steiggeschwindigkeit (v_{B}) des Einfüllmaterials den zumindest einen bereitgestellten Grenzwert der Steiggeschwindigkeit des Einfüllmaterials erreicht.

2. Verfahren nach Anspruch 1 **dadurch gekennzeichnet, dass** die optischen Messungen eine aktuelle Distanz von der zumindest einen aktuellen Schüttlagenhöhe (HS) des Einfüllmaterials in der Schalung (21) zu der zumindest einen optischen Sensoreinrichtung (30) während der Befüllung des einzufüllenden Materials umfasst und bevorzugt die aktuelle Steiggeschwindigkeit (v_{B}) intervallbezogen und/oder durchschnittlich berechnet wird.

3. Verfahren nach Anspruch 1 oder 2, **dadurch gekennzeichnet, dass** vor dem Schritt a) zumindest ein erster Parameter der Schalung (21), wie insbesondere zumindest eine Höhe der Schalung (21) und/oder zumindest einen Materialparameter des Einfüllmaterials, bereitgestellt wird und insbesondere der zumindest eine Grenzwert auf dem zumindest einen ersten Parameter basiert.

4. Verfahren nach einem der zuvor genannten Ansprüche, **dadurch gekennzeichnet, dass** eine Schüttlagenhöhenentwicklung (49) berechnet wird und insbesondere zumindest einem Bauteil des Bauwerks zugeordnet wird.

5. Verfahren nach einem der zuvor genannten Ansprüche, **dadurch gekennzeichnet, dass** die Verdichtungsphase des Einfüllmaterials und/oder der Verdichtungsgrad des Einfüllmaterials bestimmt wird.

6. Verfahren nach einem der zuvor genannten Ansprüche, **dadurch gekennzeichnet, dass** zumindest eine Temperatur an der Schalung (21) und/oder die Umgebungsluftfeuchte und/oder die Umgebungstemperatur gemessen wird und/oder eine Unterbrechung der Befüllung mithilfe zumindest einigen Messwerten der optischen Messungen identifiziert wird.

7. Verfahren nach einem der zuvor genannten Ansprüche, **dadurch gekennzeichnet, dass** zumindest Messwerte aus den optischen Messungen an ein elektronisches Endgerät übermittelt werden, insbesondere an eine Ausgabeeinrichtung am elektronischen Endgerät ausgegeben werden, wobei das elektronische Endgerät insbesondere als ein Mobiltelefon (40) ausgebildet ist und/oder zumindest die Messwerte aus den optischen Messungen sowie das zumindest eine Messintervall an eine Speichereinrichtung (43), insbesondere an eine Cloud und/oder einen Server, übermittelt wird.

8. Verfahren nach einem der zuvor genannten Ansprüche, **dadurch gekennzeichnet, dass** ein Befüllungssystem zum Befüllen der Schalung (21) mit dem Einfüllmaterial gesteuert wird, wenn die zumindest eine aktuelle Steiggeschwindigkeit (v_{B}) des Einfüllmaterials den zumindest einen bereitgestellten Grenzwert der Steiggeschwindigkeit des Einfüllmaterials erreicht.

9. Sensoreinrichtung (30) zum Überwachen einer Steiggeschwindigkeit eines Einfüllmaterials umfassend zumindest einen ersten optischen Sensor, insbesondere einen Laser-Abstandssensor (33), und eine Befestigungseinrichtung (31) zum Befestigen zumindest des ersten optischen Sensors an einer Schalung (21), sodass zumindest der erste optische Sensor über einer Schalungsöffnung positionierbar ist, und die optische Sensoreinrichtung (30) mit einer Recheneinrichtung (41) verbunden ist, wobei die zumindest eine Recheneinrichtung (41) ausgebildet ist, eine aktuelle Steiggeschwindigkeit (vB) des Einfüllmaterials bei der Befüllung der Schalung (21) mit dem Einfüllmaterial zumindest mithilfe der Messwerte der optischen Messungen der zumindest einen aktuellen Schüttlagenhöhe (HS), zumindest einem Parameter der Umgebungsbedingungen, insbesondere der Lufttemperatur, einer Referenztemperatur und/oder einer Einbautemperatur, sowie anhand eines Zeitstempels zumindest einer Zeitmessung (t) in zumindest einem Messintervall oder eine Zeitmessvorrichtung zum Ermitteln der Zeitmessung, zu berechnen, wobei zumindest ein Grenzwert für die aktuelle Steiggeschwindigkeit (vB) des Einfüllmaterials in der zumindest einen Recheneinrichtung (41) bereitgestellt ist, wobei der zumindest eine Grenzwert auf dem zumindest einen Parameter der Umgebungsbedingungen basiert.

10. Sensoreinrichtung (30) nach Anspruch 9, **dadurch gekennzeichnet, dass** zumindest ein Vibrationssensor (38) und/oder zumindest ein Schwingungssensor (39) und/oder Temperatursensor und/oder Feuchtigkeitssensor vorhanden sind.

11. Sensoreinrichtung nach Anspruch 9 oder 10, **dadurch gekennzeichnet, dass** eine Steuereinrichtung (35), insbesondere ein Mikrokontroller (46), vorhanden ist, die mit der zumindest einen Recheneinrichtung (41) verbunden ist, und die zum Austausch von Sensordaten und Befehlsdaten zumindest mit dem zumindest einen ersten optischen Sensor verbunden sind.

12. Sensoreinrichtung nach einem der Ansprüche 9 bis 11, **dadurch gekennzeichnet, dass** die Steuereinrichtung (35) eine Ausgabeeinrichtung (46) veranlasst, das zumindest eine Warnsignal (WS) akustisch und/oder visuell an der Ausgabeeinrichtung (46) auszugeben.

13. Computerprogrammprodukt umfassend Programmbefehle, die bei einer Ausführung des Computerprogramms durch eine Recheneinrichtung (41), eine Sensoreinrichtung (30) nach einem der Ansprüche 9 bis 12 veranlassen, zumindest ein Verfahren nach Anspruch 1 bis 8 auszuführen.

14. Computerlesbares Medium, das zumindest ein Computerprogrammprodukt umfasst, das bei der Ausführung durch zumindest eine Recheneinrichtung (41) einer Sensoreinrichtung (30) nach einem der Ansprüche 9 bis 12 veranlasst, zumindest ein Verfahren nach einem der Ansprüche 1 bis 8 durchzuführen.

15. Sensorkontrollsystem (25) umfassend zumindest eine Sensoreinrichtung (30) nach einem der Ansprüche 9 bis 12 sowie ein Endgerät mit einem Computerprogrammprodukt nach Anspruch 13.

## Claims

1. A method for monitoring the rate of rise of a filling material, in particular, fresh concrete (20), in a vertically fillable formwork (21) with at least one optical sensor device (30) and a computing device (41) comprising at least the following steps:
a) providing at least one limit value for the rate of rise of the feed material in the at least one computing device (41), wherein at least one limit value is based on at least one parameter of the ambient conditions, in particular the air temperature, a reference temperature and/or an installation temperature;
b) providing at least one measurement interval for an optical measurement with the optical sensor device (30) in the at least one computing device (41), wherein, in particular, the at least one measurement interval is dependent on consistency information of the filling material;
c) filling the formwork (21) with the filling material;
d) carrying out optical measurements with the optical sensor device (30) on at least one current fill layer height (HS) of the filling material in the formwork (21) during the filling of the formwork (21) with the filling material;
e) calculating the current rate of rise (v_{B}) of the filling material when filling the formwork (21) with the filling material at least by means of the measured values of the optical measurements of at least one current fill layer height (HS), at least one parameter of the ambient conditions, and at least one time measurement (t) in the at least one measuring interval in the at least one computing device (41), wherein a time stamp is set in the at least one computing device (41) for this purpose or a time measurement device is used to determine the timing;
f) outputting at least one warning signal (WS) if the at least one current rate of rise (v_{B}) of the feed material reaches the at least one provided limit value of the rate of rise of the feed material.

2. The method according to Claim 1, **characterized in that** the optical measurements include a current distance from the at least one current fill layer height (HS) of the filling material in the formwork (21) to the at least one optical sensor device (30) during the filling of the material to be filled and that the current rate of rise (v_{B}) is calculated on an interval-related and/or average basis.

3. The method according to Claim 1 or 2, **characterized in that** at least one first parameter of the formwork (21), such as, in particular, at least one height of the formwork (21) and/or at least one material parameter of the filling material, is provided prior to step (a) and, in particular, the at least one limit value on which at least one first parameter is based.

4. The method according to any of the preceding claims, **characterized in that** a development of the fill layer height (49) is calculated and, in particular, is assigned to at least one component of the structure.

5. The method according to any of the preceding claims, **characterized in that** the compaction phase of the filling material and/or the degree of compaction of the filling material is determined.

6. The method according to any of the preceding claims, **characterized in that** at least one temperature at the formwork (21) and/or the ambient air humidity and/or ambient temperature is measured and/or an interruption of the filling is identified by means of at least some measured values of the optical measurements.

7. The method according to any of the preceding claims, **characterized in that** at least measured values from the optical measurements are transmitted to an electronic terminal device, in particular, to an output device on the electronic terminal device, wherein the electronic terminal device is designed in particular as a mobile phone (40) and/or at least the measured values from the optical measurements as well as at least one measurement interval are transmitted to a storage device (43), in particular to a cloud and/or server.

8. The method according to any of the preceding claims, **characterized in that** a filling system for filling the formwork (21) with the filling material is controlled if the at least one current rate of rise (v_{B}) of the filling material reaches the at least one provided limit value of the rate of rise of the filling material.

9. A sensor device (30) for monitoring a rate of rise of a filling material comprising at least one first optical sensor, in particular, a laser distance sensor (33), and a fastening device (31) for attaching at least the first optical sensor to a formwork (21) so that at least the first optical sensor can be positioned above a formwork opening, and the optical sensor device (30) is connected to a computing device (41), wherein the at least one computing device (41) is designed to calculate a current rate of rise (v_{B}) of the filling material when the formwork (21) is filled with the filling material at least by means of the measured values of the optical measurements of the at least one current fill layer height (HS), at least one parameter of the ambient conditions, in particular, the air temperature, a reference temperature and/or an installation temperature, as well as, on the basis of a time stamp, at least one time measurement (t) in the at least one measurement interval or a time measurement device for determining the time measurement, wherein at least one limit value for the current rate of rise (v_{B}) of the filling material is provided in the at least one computing device (41), wherein at least one limit value is based on at least one parameter of the ambient conditions.

10. The sensor device (30) according to Claim 9, **characterized in that** at least one vibration sensor (38) and/or at least one vibration sensor (39) and/or oscillation sensor and/or humidity sensor are present.

11. The sensor device according to Claim 9 or 10, **characterized in that** there is a control device (35), in particular, a microcontroller (46) is present, which is connected to at least one computing device (41) and which is connected to at least one first optical sensor for the exchange of sensor data and command data.

12. The sensor device according to any one of the Claims 9 to 11, **characterized in that** the control device (35) causes an output device (46) to output at least one warning signal (WS) acoustically and/or visually to the output device (46).

13. A computer program product comprising program commands which, when executed by a computing device (**41**), a sensor device (30) according to any one of the Claims 9 to 12, cause at least one method according to Claims 1 to 8 to be executed.

14. A computer-readable medium comprising at least one computer program product which, when executed by at least one computing device (41) of a sensor device (30) according to one of the Claims 9 to 12, causes at least one method according to one of the Claims 1 to 8 to be carried out.

15. A sensor control system (25) comprising at least one sensor device (30) according to any one of the Claims 9 to 12 and a terminal device comprising a computer program product according to Claim 13.

## Revendications

1. Procédé, destiné à superviser une vitesse de montée d'une matière de remplissage, notamment de béton frais (20), dans un coffrage (21) remplissable à la verticale, à l'aide d'au moins un dispositif de capteur (30) optique et d'un dispositif de calcul (41), comprenant au moins les étapes suivantes, consistant à :
a) mettre à disposition au moins une valeur limite pour la vitesse de montée de la matière de remplissage dans l'au moins un dispositif de calcul (41), l'au moins une valeur limite étant basée sur au moins un paramètre des conditions environnantes, notamment la température de l'air, une température de référence et / ou une température d'intégration ;
b) mettre à disposition au moins un intervalle de mesure pour une mesure optique à l'aide du dispositif de capteur (30) optique dans l'au moins un dispositif de calcul (41), notamment l'au moins un intervalle de mesure dépendant d'une information de consistance de la matière de remplissage ;
c) remplir le coffrage (21) avec la matière de remplissage ;
d) procéder à l'aide du dispositif de capteur (30) optique à des mesures optiques concernant au moins une hauteur de déversement (HS) actuelle de la matière de remplissage dans le coffrage (21) pendant le remplissage du coffrage (21) avec la matière de remplissage;
e) calculer la vitesse de montée (v_{B}) actuelle de la matière de remplissage lors du remplissage du coffrage (21) avec la matière de remplissage, au moins à l'aide des valeurs mesurées lors des mesures optiques de l'au moins une hauteur de déversement (HS) actuelle, de l'au moins un paramètre des conditions environnantes, ainsi que d'au moins une mesure du temps (t) dans l'au moins un intervalle de mesure, dans l'au moins un dispositif de calcul (41), à cet effet, un horodateur étant placé dans l'au moins un dispositif de calcul (41) ou un dispositif de mesure du temps étant utilisé pour déterminer la mesure du temps ;
f) délivrer au moins un signal d'alerte (WS), si l'au moins une vitesse de montée (v_{B}) actuelle de la matière de remplissage atteint l'au moins une valeur limite de la vitesse de montée de la matière de remplissage.

2. Procédé selon la revendication 1, **caractérisé en ce que** les mesures optiques englobent une distance actuelle entre l'au moins une hauteur de déversement (HS) actuelle de la matière de remplissage dans le coffrage (21) et l'au moins un dispositif de capteur (30) pendant le remplissage de la matière qui doit être chargée et de préférence, la vitesse de montée (v_{B}) actuelle est calculée en rapport aux intervalles et / ou en moyenne.

3. Procédé selon la revendication 1 ou 2, **caractérisé en ce qu'**avant l'étape a), il est mis à disposition au moins un premier paramètre du coffrage (21), tel que notamment au moins une hauteur du coffrage (21) et / ou au moins un paramètre de matière de la matière de remplissage et notamment l'au moins une valeur limite est basée sur l'au moins un paramètre.

4. Procédé selon l'une quelconque des revendications précédemment citées, **caractérisé en ce qu'**une évolution (49) de la hauteur de déversement est calculée et notamment affectée à au moins un élément de construction de l'ouvrage de construction.

5. Procédé selon l'une quelconque des revendications précédemment citées, **caractérisé en ce que** la phase de compactage de la matière de remplissage et / ou le taux de compactage de la matière de remplissage est déterminé(e).

6. Procédé selon l'une quelconque des revendications précédemment citées, **caractérisé en ce qu'**au moins une température sur le coffrage (21) et / ou l'humidité de l'air environnant et / ou la température environnante est mesurée et / ou une interruption du remplissage est identifiée à l'aide d'au moins certaines valeurs mesurées lors de la mesure optique.

7. Procédé selon l'une quelconque des revendications précédemment citées, **caractérisé en ce qu'**au moins des valeurs mesurées provenant de la mesure optique sont transmises à un terminal électronique, notamment sont affichées sur un dispositif de sortie sur le terminal électronique, le terminal électronique étant conçu notamment sous la forme d'un téléphone mobile (40) et / ou au moins les valeurs mesurées provenant des mesures optiques, ainsi que l'au moins un intervalle de mesure étant transmis à un dispositif de mémoire (43), notamment à un nuage et / ou à un serveur.

8. Procédé selon l'une quelconque des revendications précédemment citées, **caractérisé en ce qu'**un dispositif de remplissage, destiné à remplir le coffrage (21) avec la matière de remplissage est commandé lorsque l'au moins une vitesse de montée (v_{B}) actuelle de la matière de remplissage atteint l'au moins une valeur limite mise à disposition de la vitesse de montée de la matière de remplissage.

9. Dispositif de capteur (30), destiné à superviser une vitesse de montée d'une matière de remplissage, comprenant au moins un premier capteur optique, notamment un capteur de distance (33) à laser et un dispositif de fixation (31), destiné à fixer au moins le premier capteur optique sur un coffrage (21), de sorte qu'au moins le premier capteur optique soit positionnable au-dessus d'une ouverture dans le coffrage et le dispositif de capteur (30) optique étant connecté avec un dispositif de calcul (41), l'au moins un dispositif de calcul (41) étant conçu pour calculer une vitesse de montée (vB) actuelle de la matière de remplissage lors du remplissage du coffrage (21) avec la matière de remplissage, au moins à l'aide des valeurs mesurées lors des mesures optiques de l'au moins une hauteur de déversement (HS) actuelle, d'au moins un paramètre des conditions environnantes, notamment de la température de l'air, d'une température de référence et / ou d'une température d'intégration, ainsi qu'à l'aide d'un horodateur au moins une mesure du temps (t) dans au moins un intervalle de mesure ou à l'aide d'un dispositif de mesure du temps destiné à déterminer la mesure du temps, au moins une valeur limite pour la vitesse de montée (vB) actuelle de la matière de remplissage étant mise à disposition dans l'au moins un dispositif de calcul (41), l'au moins une valeur limite étant basée sur l'au moins un paramètre des conditions environnantes

10. Système de capteur (30) selon la revendication 9, **caractérisé en ce qu'**au moins un capteur de vibrations (38) et / ou au moins un capteur d'oscillations (39) et / ou un capteur de température et / ou un capteur d'humidité est présent.

11. Système de capteur selon la revendication 9 ou 10, **caractérisé en ce qu'**un dispositif de commande (35), notamment un microcontrôleur (46) est présent, qui est connecté avec l'au moins un dispositif de calcul (41) et qui pour l'échange de données du capteur et de données de commande est connecté au moins avec l'au moins un premier capteur optique.

12. Système de capteur selon l'une quelconque des revendications 9 à 11, **caractérisé en ce que** le dispositif de commande (35) incite un dispositif de sortie (46) à délivrer l'au moins un signal d'alerte (WS) par voie acoustique et / ou visuelle sur le dispositif de sortie (46).

13. Produit de programme informatique, comprenant des commandes de programme, qui lors d'une exécution du programme informatique par un dispositif de calcul (41), incitent un dispositif de capteur (30) selon l'une quelconque des revendications 9 à 12 à réaliser au moins un procédé selon la revendication 1 à 8.

14. Support lisible par ordinateur, qui comprend au moins un produit de programme informatique, qui lors de l'exécution par au moins un dispositif de calcul (41) incite un dispositif de capteur (30) selon l'une quelconque des revendications 9 à 12 à réaliser au moins un procédé selon l'une quelconque des revendications 1 à 8.

15. Système de contrôle par capteur (25), comprenant au moins un dispositif de capteur (30) selon l'une quelconque des revendications 9 à 12, ainsi qu'un terminal doté d'un produit de programme informatique selon la revendication 13.
